# EUROPÄISCHE PATENTSCHRIFT

(11) **EP 4 062 279 B1**
(45) Veröffentlichungstag und Bekanntmachung des Hinweises auf die Patenterteilung: **08.01.2025**
(21) Anmeldenummer: 20801172.6
(22) Anmeldetag: 26.10.2020
(51) Int. Cl.: B60K 35/28, B60K 35/29, B60K 35/10, G06F 3/00

(54) **VERFAHREN ZUM BETREIBEN EINES BEDIENSYSTEMS IN EINEM FAHRZEUG UND BEDIENSYSTEM FÜR EIN FAHRZEUG**
METHOD FOR OPERATING AN OPERATING SYSTEM IN A VEHICLE AND OPERATING SYSTEM FOR A VEHICLE
PROCÉDÉ POUR FAIRE FONCTIONNER UN SYSTÈME DE COMMANDE UTILISATEUR DANS UN VÉHICULE ET SYSTÈME DE COMMANDE UTILISATEUR POUR UN VÉHICULE

(30) Priorität: 18.11.2019 DE 102019217733
(43) Veröffentlichungstag der Anmeldung: 28.09.2022
(73) Patentinhaber: VOLKSWAGEN AKTIENGESELLSCHAFT, 38440 Wolfsburg (DE)
(72) Erfinder: WAGNER, Volkmar, 10965 Berlin (DE)
(86) Internationale Anmeldenummer: PCT/EP2020/080081
(87) Internationale Veröffentlichungsnummer: WO 2021/099067

(56) Entgegenhaltungen:
- EP-A1- 3 092 559
- US-A1- 2002 085 043
- US-A1- 2017 136 876
- US-B1- 10 051 103

## Beschreibung

Die vorliegende Erfindung betrifft ein Verfahren zum Betreiben eines Bediensystems in einem Fahrzeug, gemäss Anspruch 1, sowie ein Bediensystem für ein Fahrzeug, gemäss Anspruch 9.

Die zunehmende Verfügbarkeit von Informationen aus unterschiedlichsten Quellen, wie sie etwa durch das Internet gewährleistet wird, stellt den Nutzer eines modernen elektronischen Bediensystems vor neue Herausforderungen. Auch im Kontext der Automobilität ist ein Trend zur zunehmenden Integration von Daten, die nicht nur durch das Fahrzeug selbst, sondern auch durch externe Einrichtungen bereitgestellt werden, erkennbar. Zum Beispiel stellen Fahrassistenten, zusätzlich angebotene Services, Messaging-Dienste, soziale Medien, Nachrichtendienste und andere Angebote von Drittanbietern Daten und Benachrichtigungen zur Verfügung, die trotz ihrer Diversität und unterschiedlichen Relevanz vom Nutzer erfasst und verarbeitet werden sollen. Weitere mögliche Dienste, die beispielsweise als Online-Dienste bereitgestellt werden, betreffen etwa die Verwaltung von Parkplätzen, das Be- und Entladen von Fahrzeugen, Fahrzeug-Services und weitere Angebote.

Die Vielzahl der eintreffenden Informationen wird zuweilen als dynamischer Strom von Daten, englisch *"stream"* beziehungsweise "*feed*"*,* modelliert. Zur Ausgabe eines solchen Stroms sind jedoch keine Lösungen bekannt, die spezifisch auf die Bedürfnisse in einem Fahrzeug ausgelegt sind. Von besonderer Bedeutung ist hier, dass der Nutzer, insbesondere der Fahrer des Fahrzeugs, seine Aufmerksamkeit lediglich in begrenztem Umfang auf das Bediensystem richten kann, da das Führen des Fahrzeugs und das Beobachten des Verkehrsumfeldes seine ganze Aufmerksamkeit erfordern.

Ein modernes Bediensystem ist aus der EP 3 092 559 B1 bekannt.

Es ist die Aufgabe der vorliegenden Erfindung, ein Verfahren und ein Bediensystem der eingangs genannten Art bereitzustellen, bei denen dem Nutzer ein einfacher und schneller Zugang zu relevanten Informationen ermöglicht wird.

Erfindungsgemäß wird diese Aufgabe durch ein Verfahren mit den Merkmalen des Anspruchs 1 und ein Bediensystem mit den Merkmalen des Anspruchs 9 gelöst. Vorteilhafte Ausgestaltungen und Weiterbildungen ergeben sich aus den abhängigen Ansprüchen.

Bei dem erfindungsgemäßen Verfahren werden Anzeigedaten einer grafischen Bedienoberfläche mit zumindest einem ersten Anzeigebereich erzeugt und ausgegeben, wobei die grafische Bedienoberfläche einen Grundzustand und einen Info-Zustand aufweist. Es werden Kontextdaten über einen aktuellen Kontext des Fahrzeugs erfasst und anhand der erfassten Kontextdaten wird ein erster Relevanzwert für eine erste Info-Anwendung bestimmt.

In Abhängigkeit von den bestimmten ersten Relevanzwert der ersten Info-Anwendung wird der Info-Zustand aktiviert, wobei beim Aktivieren des Info-Zustands der erste Anzeigebereich so verkleinert wird, dass ein Info-Bereich gebildet wird. Ein grafisches Info-Objekt wird anhand der ersten Info-Anwendung erzeugt und in dem Info-Bereich ausgegeben, wobei der erste Relevanzwert mit einem vorgegebenen Relevanz-Schwellenwert verglichen wird; und wobei das grafische Info-Objekt erzeugt wird, wenn der erste Relevanzwert den Relevanz-Schwellenwert überschreitet.

Dadurch können vorteilhafterweise relevante Inhalte besonders einfach und klar erfassbar ausgegeben werden. Der Nutzer kann dadurch leicht erkennen, wenn neue relevante Informationen bereitgestellt werden und beispielsweise eine Bedienung erforderlich ist. Gleichzeitig wird der im Fahrzeug zur Verfügung stehende Platz zur Anzeige von grafischen Daten optimal genutzt und flexibel angepasst.

Die Ausgabe der Bedienoberfläche erfolgt auf einer Anzeigefläche, die insbesondere fest im Fahrzeug angebracht ist, etwa auf einer Anzeigefläche eines Mitteldisplays im Bereich einer Mittelkonsole oder eines Armaturenbretts des Fahrzeugs. Bei weiteren Ausbildungen der Erfindung kann die Ausgabe alternativ oder zusätzlich in einem Kombiinstrument des Fahrzeugs oder mittels einer Ausgabeeinheit aus dem Bereich der erweiterten Realität (*"augmented reality", "virtual reality"*) erfolgen, etwa in einer Sichtfeldanzeige (*Head-up-Display*)*.* Bei einer weiteren Ausbildung kann die Anzeige ferner auf einer Anzeigefläche eines mobilen Nutzergeräts erfolgen, etwa eines Mobiltelefons oder Tablet-Computers, welches sich im Fahrzeug befindet und lösbar mit dem Fahrzeug gekoppelt ist, etwa durch eine datentechnische Verbindung.

Die grafische Bedienoberfläche ist auf an sich bekannte Weise ausgebildet. Sie umfasst insbesondere eine grafische Darstellung für eine Mensch-Maschine-Schnittstelle. Dabei sind technische Einrichtungen mittels Steuerelementen bedienbar, wozu etwa Schaltflächen oder Symbole der Darstellung verwendet werden können. Insbesondere kann die Bedienoberfläche Schalt- und Bedienelemente umfassen, welche die Bedienung einer Funktionalität für einen Menschen erfassbar darstellen. Beispielsweise kann der Betrag eines Parameters dargestellt werden und seine Einstellung durch ein Einstellelement visualisiert werden. Die Bedienoberfläche kann ferner Elemente zur Informationsanzeige umfassen und damit eine durch einen Menschen interpretierbare Ausgabe ermöglichen.

Der Grundzustand der grafischen Bedienoberfläche ist bei der Erfindung so definiert, dass kein Info-Bereich vorgesehen ist. Dies schließt nicht aus, dass im ersten Anzeigebereich auch Informationen ausgegeben werden; es ist jedoch kein grafisches Objekt umfasst, welches die spezifischen Eigenschaften des Info-Bereichs aufweist, in dem bei der Erfindung das grafische Info-Objekt dargestellt wird. Insbesondere werden im Grundzustand keine Info-Objekte dynamisch angezeigt, wie weiter unten beschrieben. Umgekehrt weist die grafische Bedienoberfläche im Info-Zustand einen Info-Bereich auf und in diesem wird gemäß dem erfindungsgemäßen Verfahren ein Info-Objekt ausgegeben.

Bei einer Ausbildung des erfindungsgemäßen Verfahrens umfassen die erfassten Kontextdaten Merkmale des Fahrzeugs, einen Betriebszustand des Fahrzeugs, Merkmale einer Fahrt eines Nutzers mit dem Fahrzeug und/oder Nutzerdaten des Nutzers. Dabei werden die Kontextdaten vorteilhafterweise besonders stark auf das Fahrzeug und die Fahrt beziehungsweise den Betrieb des Fahrzeugs bezogen erfasst. Hierdurch kann eine besonders intelligente Antwort oder Systemreaktion auf einen sich stetig verändernden Kontext des Fahrzeugs gebildet werden.

Im Unterschied zu anderen Verfahren, bei denen etwa neu eintreffende Nachrichten auf einer Bedienoberfläche ausgegeben werden sollen, wird bei der Erfindung der Relevanzwert für die erste Info-Anwendung mit Bezug zu dem Fahrzeug beziehungsweise zum Kontext des Fahrzeugs bestimmt. Dadurch erfolgt die Ausgabe des Info-Objekts beziehungsweise das Aktivieren des Info-Zustands bei dem Verfahren besonders stark auf die Bedürfnisse des Nutzers im Fahrzeug, insbesondere auf den Fahrer des Fahrzeugs, ausgerichtet.

Die Kontextdaten können bei der Erfindung unterschiedlichste Bereiche der Nutzung des Fahrzeugs betreffen. Zu den Merkmalen des Fahrzeugs gehören feste Parameter, wie etwa seine Abmessungen, oder variable Größen, wie etwa die Öffnungszustände von Türen und Fenstern sowie die Belegung des Fahrzeugs durch Fahrgäste. Ferner können ein Ladezustand, ein verbleibender Energievorrat, eine Reichweite, gegebenenfalls technische Probleme oder fahrzeugbezogene Halte umfasst sein. Zudem kann ein fahrender oder geparkter Zustand ein solches Merkmal sein. Der Betriebszustand des Fahrzeugs kann beispielsweise das Fahren oder den Stillstand des Fahrzeugs betreffen, ferner können Informationen über eine Geschwindigkeit und/oder Beschleunigung sowie Zustände von Fahrerassistenzsystemen umfasst sein. Die Kontextdaten mit Bezug zu einer Fahrt des Fahrzeugs können Umgebungsdaten betreffen, die etwa durch Sensoren des Fahrzeugs erfassbar sind oder von einer externen Quelle abgerufen werden, etwa Informationen über eine Position des Fahrzeugs und seine Umgebung, Fahrzeuge und Gegenstände in einer Umgebung des Fahrzeugs, über verkehrstechnische Einrichtungen, Wetterverhältnisse oder Sonderziele in der Umgebung. Sie können jedoch auch Verkehrsdaten, Staudaten oder andere Informationen über Verkehrszustände sowie Verkehrswarnungen umfassen. Sie können ferner Einstellungen und/oder Zustände eines Navigationssystems betreffen, etwa ein Ziel einer Route oder einen geplanten Routenverlauf, ferner kann die Dauer der geplanten Route berücksichtigt werden. Weitere Merkmale können Typen der Fahrt sein, etwa Arbeitsweg, Wochenendausflug oder Urlaubsfahrt, die Unterscheidung zwischen einfachen Fahrten oder Fahrten mit einer geplanten Rückfahrt. Die Nutzerdaten können unterschiedliche personalisierte Daten umfassen, etwa eine Identität des Fahrers, Beifahrers oder anderer Passagiere. Ferner können Daten eines elektronischen Kalenders oder Terminplaners, Kontaktdaten, Informationen einer Telekommunikation umfasst sein, etwa mit Textnachrichten oder Sprachverbindungen; ferner können physiologische Daten, etwa zu einer Müdigkeit oder einem Stressniveau sowie besonderen Bedürfnissen eines Fahrers oder Passagiers, umfasst sein und es können Daten über Gewohnheiten oder Präferenzen anhand einer Nutzungshistorie erfasst beziehungsweise durch einen Lernalgorithmus ausgewertet werden. Kontextdaten können ferner eine Tageszeit oder Uhrzeit sowie eine Unterscheidung zwischen Wochentagen und Wochenende betreffen.

Die Erfassung der Kontextdaten erfolgt auf an sich bekannte Weise, etwa mittels Sensoren des Fahrzeugs oder anhand einer datentechnischen Verbindung zu einer externen Einheit, durch welche die Erfassung erfolgt. Die Kontextdaten können ferner von einer Speichereinheit abgerufen werden, die etwa im Fahrzeug oder bei einer externen Einrichtung vorgesehen ist.

Insbesondere ist eine fortlaufende Erfassung und Aktualisierung der Kontextdaten vorgesehen und das Verfahren wird iterativ anhand der jeweils aktuellen Kontextdaten ausgeführt. Das heißt, der erste Relevanzwert für die erste Info-Anwendung kann ständig neu evaluiert werden und die Darstellung des Info-Objekts kann entsprechend angepasst werden. Hierdurch können sich ändernde Bedingungen und neu auftretende Informationen, beispielsweise neu eintreffende Nachrichten oder neu auftretende Ereignisse, berücksichtigt werden.

Die erste Info-Anwendung ist insbesondere als Programm eines Computers ausgebildet. Sie kann verschiedene Funktionalitäten betreffen, für die im Fahrzeug Informationen für einen Nutzer ausgegeben und/oder Interaktionsmöglichkeiten geschaffen werden sollen. Eine Info-Anwendung im Sinne der Erfindung kann dabei prinzipiell sämtliche Anwendungen betreffen, bei denen eine Anzeige für den Nutzer des Fahrzeugs erzeugt werden kann.

Die Info-Anwendung betrifft insbesondere Nachrichten beziehungsweise Benachrichtigungen, insbesondere von externen Einheiten oder externen Kommunikationspartnern. Sie kann ferner Zusatzinhalte betreffen, die zusätzlich zu den im ersten Anzeigebereich ausgegebenen Daten ausgegeben werden. Beispielsweise kann der Nutzer die Inhalte im ersten Anzeigebereich selbst konfigurieren, etwa durch manuelles Aufrufen oder Beenden einer Anwendung im Fahrzeug oder durch das Aktivieren oder Deaktivieren von Funktionalitäten, mit denen eine bestimmte Informationsausgabe und/oder Anzeige von Bedienmöglichkeiten auf der Anzeigefläche verbunden sind. Hingegen werden die in dem Info-Bereich ausgegebenen Info-Objekte in Abhängigkeit von ihrer Relevanz für den jeweiligen Kontext des Fahrzeugs automatisch so erzeugt, dass dem Nutzer aus einem stetig dynamischen und sich verändernden Strom von Daten besonders relevante Inhalte ausgegeben werden.

Die Bestimmung des ersten Relevanzwertes kann auf an sich bekannte Weise erfolgen. Hierbei wird insbesondere der ersten Info-Anwendung zu einem bestimmten Zeitpunkt ein bestimmter absoluter oder relativer Zahlenwert zugeordnet. Insbesondere bewertet der Relevanzwert die Relevanz der Info-Anwendung relativ zu anderen Info-Anwendungen oder die Relevanz für einen bestimmten Nutzer wird absolut bestimmt. Es können Gewichtungsparameter vorgesehen sein, anhand derer die Relevanz bestimmter Info-Anwendungen in Abhängigkeit von den Kontextdaten bestimmbar ist, wobei insbesondere aktuelle Programmzustände und/oder Programmereignisse berücksichtigt werden.

Beispielsweise können Info-Anwendungen Kategorien zugeordnet werden, für die anhand der Kontextdaten bestimmte Parameter einer Gewichtung bestimmt werden. Beispielsweise können die Relevanzwerte von Info-Anwendungen, welche die Befahrbarkeit einer Route betreffen, als besonders relevant bewertet werden, während anhand der Kontextdaten eine laufende Navigation des Fahrzeugs bestimmt wird, insbesondere wenn die Informationen über die Befahrbarkeit eine konkret geplante Route betreffen. Ferner können Info-Anwendungen, welche eine direkte Telekommunikation zwischen dem Nutzer und einem anderen Nutzer betreffen, einer Kategorie mit besonders hoher Relevanz zugeordnet sein, etwa um einen eingehenden Anruf anhand einer entsprechenden Info-Anwendung mit hoher Priorität anzuzeigen und dem Nutzer das Annehmen oder Beantworten direkt zu ermöglichen.

Insbesondere sind der erste Anzeigebereich und der Info-Bereich als Fenster oder Widgets innerhalb der grafischen Bedienoberfläche ausgebildet. Insbesondere nimmt ein Widget den gesamten Info-Bereich ein. Ferner kann das grafische Info-Objekt als ein gegenüber dem Info-Bereich untergeordnetes Sub-Widget oder Sub-Fenster ausgebildet sein. Das grafische Objekt kann also insbesondere als Sub-Widget innerhalb eines als Widget ausgebildeten Info-Bereichs ausgebildet sein.

Als "Fenster" werden in diesem Sinne insbesondere begrenzte Bereiche der grafischen Bedienoberfläche verstanden, in denen von einem zugeordneten Anwendungsprogramm bereitgestellte Daten ausgegeben werden. Dabei werden insbesondere alle grafisch ausgegebenen Daten einer Instanz des zugeordneten Anwendungsprogramms lediglich in dem Fenster ausgegeben. Ein "Widget" in diesem Sinne ist insbesondere ein in die grafische Bedienoberfläche integriertes Programm, das heißt, die Ausführung der Programms erfolgt dann, wenn das Widget in der grafischen Bedienoberfläche ausgegeben wird. Ferner können weitere Konzepte der Darstellung von Inhalten in bestimmten Bereichen der grafischen Bedienoberfläche analog dazu verwendet werden. Sub-Widgets sind einem anderen Widget untergeordnete Widgets. Sie sind insbesondere innerhalb einer dem übergeordneten Widget zugeordneten Fläche innerhalb der grafischen Bedienoberfläche angeordnet.

Insbesondere können bei der Erfindung Info-Objekte als "Feed-Cards" ausgebildet sein. Hierunter werden im Sinne der Erfindung Bereiche der Anzeige verstanden, die etwa nach Art der an sich bekannten Anzeigebereiche, Tabs, Fenster oder Widgets ausgebildet sind, in denen zu einem Zeitpunkt oder während eines Zeitraums relevante Informationen ausgegeben oder Bedienmöglichkeiten bereitgestellt werden. Eine Feed-Card kann dabei als Info-Objekt auch innerhalb anderer Anzeigebereiche, Fenster, Widgets oder Objekte angeordnet sein und ist einer bestimmten Info-Anwendung als Informationsquelle beziehungsweise Bedienungsziel zugeordnet, zu der die jeweils relevanten Daten ausgegeben werden.

Das Info-Objekt, beispielsweise eine Feed-Card, umfasst insbesondere Textelemente, die auch als Hyperlinks oder auf andere Weise bedienbar ausgebildet sein können, und/oder ein grafisches Symbol, anhand dessen einem Nutzer beispielsweise die zugeordnete Info-Anwendung erfassen kann. Ferner können festgelegte Größen und Gestaltungsvorlagen für das Info-Objekt vorgesehen sein, beispielsweise eine ein- oder mehrzeilige Gestaltung, kleinere und größere Abmessungen, für die bestimmte Stufen definiert sind, definierte Bereiche für Text- und/oder Bildelemente sowie Vorgaben zur farblichen und/oder typografischen Gestaltung.

Bei einer Ausbildung der Erfindung können die Anordnung und/oder Größe des grafischen Info-Objekts in Abhängigkeit von dem ersten Relevanzwert ausgebildet sein. Das Info-Objekt kann beispielsweise umso größer dargestellt werden, je höher der zugeordnete Relevanzwert ist. Es kann ferner innerhalb des Info-Bereichs umso näher an einer bestimmten Position angeordnet sein, beispielsweise umso näher an einem Rand des Info-Bereichs, je größer der Relevanzwert ist. Umgekehrt kann das Info-Objekt umso näher an einer anderen Position angeordnet sein, beispielsweise umso näher an einem gegenüberliegenden Rand des Info-Bereich, je geringer der Relevanzwert ist. Anhand der Relevanzwerte für verschiedene Info-Anwendungen kann ferner eine Rangfolge mehrerer Info-Objekte bestimmt werden, wobei in diesem Fall die Info-Objekte im Info-Bereich unter- oder nebeneinander in einer bestimmten Reihenfolge angezeigt werden. Auch weitere Eigenschaften der Darstellung der Info-Objekte können anhand des Relevanzwertes ausgebildet sein, etwa grafische Parameter wie etwa Farbe, Sättigung, Transparenz oder Kontrast. Beispielsweise können Info-Objekte, denen ein niedriger Relevanzwert zugeordnet ist, insbesondere wenn ein Relevanz-Schwellenwert unterschritten wird, auf eine bestimmte Weise dargestellt werden, etwa ausgegraut oder in anderer Weise weniger deutlich erfassbar als Info-Objekte mit einem höheren Relevanzwert.

Bei der Erfindung kann auch das grafische Info-Objekt selbst als Widget ausgebildet sein, nämlich ein Programm, das eine Informationsausgabe generieren oder bedienbare Elemente bereitstellen kann. Es kann ferner als einem weiteren Widget untergeordnetes Sub-Widget ausgebildet sein und insbesondere einer einzelnen Instanz einer Info-Anwendung zugeordnet sein. Durch das Widget können ferner Eingaben erfasst und entsprechende Steuersignale für andere Einrichtungen und/oder Programme erzeugt werden.

Ferner kann eine Zeitdauer bestimmt werden, die der Ausgabe des ersten Info-Objekts zugeordnet ist. Das heißt, das Info-Objekt wird für die bestimmte Zeitdauer ausgegeben und kann anschließend wieder ausgeblendet werden, beispielsweise wenn ein weiteres Info-Objekt ausgegeben werden soll. Es kann ferner nach Ablauf der Zeitdauer ausgeblendet werden oder seine Ausgabe kann auf andere Weise beendet werden und das Info-Objekte oder der erste Info-Bereich kann wieder aus der Anzeige verschwinden, insbesondere indem der erste Anzeigebereich wieder vergrößert wird und sich anschließend beispielsweise über die Fläche des ersten Info-Bereichs erstreckt.

Insbesondere betrifft das grafische Info-Objekt eine eingehende Nachricht eines Telekommunikationssystems, das heißt insbesondere eine von einem Telekommunikationspartner empfangene Textnachricht, und umfasst zumindest eine automatische Antwortoption. Dabei ist die automatische Antwortoption durch eine Bedienhandlung auswählbar. Nach der Auswahl wird insbesondere anhand der automatischen Antwortoption eine Antwort für den Telekommunikationspartner erzeugt und gesendet. Die automatische Antwortoption wird insbesondere in Abhängigkeit von den erfassten Kontextdaten gebildet, etwa mittels Verfahren der künstlichen Intelligenz oder des Maschinenlernens. Hierdurch wird dem Nutzer vorteilhafterweise eine schnelle und dem Kontext angepasste Reaktion auf die Nachricht ermöglicht.

Beispielsweise empfängt das System eine Textnachricht mit einer Anfrage des Telekommunikationspartner. Die Antwortoption, gegebenenfalls eine Auswahl mehrerer Antwortoptionen, wird automatisch generiert und dem Nutzer angezeigt. Dies erfolgt insbesondere anhand der erfassten Kontextdaten. Durch eine Bedienhandlung wird eine Antwortoption ausgewählt und automatisch eine entsprechende Antwort an den Telekommunikationspartner gesendet.

Insbesondere betrifft das grafische Info-Objekt eine Terminkollision und umfasst zumindest eine automatische Benachrichtigungsoption. Dabei ist die automatische Benachrichtigungsoption durch eine Bedienhandlung auswählbar. Nach der Auswahl wird insbesondere anhand der automatischen Benachrichtigungsoption eine Benachrichtigung für einen Telekommunikationspartner erzeugt und gesendet. Die automatische Benachrichtigungsoption wird insbesondere in Abhängigkeit von den erfassten Kontextdaten gebildet, etwa mittels Verfahren der künstlichen Intelligenz oder des Maschinenlernens. Hierdurch kann vorteilhafterweise eine relevante Benachrichtigung besonders schnell erzeugt werden, wenn sich aufgrund eines geänderten Kontextes des Fahrzeugs eine Terminkollision ergibt, etwa bei Verkehrsbehinderungen.

Beispielsweise wird erfasst, dass eine Verzögerung der Fahrt dazu führt, dass ein anhand von Termindaten bestimmter Termin nicht eingehalten werden kann. Anhand der Termindaten, die hier von den Kontextdaten umfasst sind, wird eine Kontaktperson bestimmt und eine Benachrichtigung erzeugt. Diese Benachrichtigungsoptionen, gegebenenfalls eine Auswahl mehrerer Benachrichtigungsoptionen, wird dem Nutzer angezeigt. Eine anhand einer Bedienhandlung ausgewählte Benachrichtigungsoptionen dient dazu, eine Benachrichtigung zu erzeugen und diese wird an die Kontaktperson gesendet.

Beim Übergang vom Grundzustand zum Info-Zustand wird bei dem Verfahren der erste Anzeigebereich verkleinert und hierdurch wird ein Info-Bereich frei, in dem anschließend das grafische Info-Objekt für die erste Info-Anwendung ausgegeben wird. Dieser Übergang kann auf unterschiedliche an sich bekannte Weisen angezeigt werden.

Bei einer Weiterbildung der Erfindung wird beim Verkleinern des ersten Anzeigebereichs eine Bildfolge so erzeugt, dass ein Verschieben zumindest eines Randes des ersten Anzeigebereichs dargestellt wird. Insbesondere kann alternativ oder zusätzlich eine Verschiebung des gesamten ersten Anzeigebereichs dargestellt werden. Die Ausgabe erfolgt dadurch vorteilhafterweise so, dass durch eine animierte Darstellung der Übergang vom Grundzustand zum Info-Zugang für den Nutzer besonders schnell und intuitiv erfassbar ist.

Zum Beispiel wird ein seitlicher Rand des ersten Anzeigebereichs so verschoben, dass jener dabei verkleinert wird. In dem dabei gebildeten freien Bereich wird der Info-Bereich ausgebildet, welcher nun seitlich neben dem ersten Anzeigebereich angeordnet ist. Dieser Vorgang erfolgt insbesondere durch ein animiertes Verkleinern des Anzeigebereichs. Das heißt, bei dem Verfahren wird insbesondere der erste Anzeigebereich nicht durch Inhalte des grafischen Info-Objekts überdeckt, wie dies etwa bei der bekannten Darstellung eines Popup der Fall wäre. Stattdessen wird die Anzeige innerhalb der grafischen Bedienoberfläche so verändert, dass ein freier Info-Bereich geschaffen und das grafische Info-Objekt dort angeordnet wird.

Bei einer Ausbildung des Verfahrens umfasst die grafische Bedienoberfläche ferner einen zweiten Anzeigebereich, der im Grundzustand der grafischen Bedienoberfläche an den ersten Anzeigebereich angrenzend angeordnet ist. Dabei wird der Info-Bereich beim Aktivieren des Info-Zustands zwischen dem ersten dem zweiten Anzeigebereich gebildet. Der Info-Bereich kann dadurch vorteilhafterweise zwischen mehreren Anzeigebereichen eingeschoben werden.

Die Anzeigebereiche können durch eine angezeigte Umrandung begrenzt sein, sie können jedoch auch eine virtuelle Grenze aufweisen. Aneinander angrenzende Anzeigebereiche können dabei mit einem Zwischenraum zwischen ihren Rändern angezeigt werden, wobei dennoch von einem Angrenzen ausgegangen wird, solange keine weiteren Objekte zwischen den Anzeigebereichen angeordnet sind beziehungsweise werden können.

Bei verschiedenen Ausbildungen können sich die Größen der beiden Anzeigebereiche, zwischen denen der Info-Bereich gebildet wird, verändern, insbesondere durch Auseinanderfahren des ersten und zweiten Anzeigebereichs, wobei gegebenenfalls auch der zweite Anzeigebereich verkleinert werden kann. Ferner können die Ränder der im Grundzustand aneinander angrenzenden Anzeigebereiche voneinander weg verschoben werden. Andererseits kann die Verkleinerung lediglich für einen Anzeigebereich ausgeführt werden, während der andere Anzeigebereich unverändert dargestellt wird. Ferner kann die Anordnung der Anzeigebereiche durch Verschieben angepasst werden.

Bei einer weiteren Ausbildung wird beim Aktivieren des Info-Zustand das grafische Info-Objekt mit einer Bewegung von einem Rand des Info-Bereichs in den Info-Bereich verschoben. Insbesondere wird dabei eine Animation ausgegeben, das heißt eine Bilderfolge, durch welche der Eindruck eines sich kontinuierlich bewegenden Info-Objekts entsteht. Hierdurch kann vorteilhafterweise dargestellt werden, dass das grafische Info-Objekt von außen in die Bedienoberfläche hinein verschoben wird. Insbesondere erscheint das grafische Info-Objekt dadurch, dass es in den Info-Bereich hinein fallend oder geschoben dargestellt wird.

Ferner kann das Info-Objekt durch eine kontinuierlich zunehmende Intensität, Helligkeit, Kontrast oder Größe eingeblendet werden oder auf andere Weise innerhalb der grafischen Bedienoberfläche erscheinen. Durch ein Verschieben des grafischen Info-Objekts kann ferner ein Umsortieren mehrerer Info-Objekte dargestellt werden, die beispielsweise als Sub-Widgets innerhalb eines übergeordneten Widgets oder Fenster dargestellt werden. Umgekehrt können Info-Objekte auf analoge Weise verschwinden, beispielsweise wenn ihr Relevanzwert einen bestimmten Schwellenwert unterschreitet, etwa indem es aus dem Info-Bereich heraus bewegt wird oder indem es ausgeblendet wird.

Bei weiteren Ausbildungen können andere an sich bekannte Weisen der grafischen Darstellung genutzt werden, um das Info-Objekt im Info-Bereich auftauchen zu lassen. Das Info-Objekt kann beispielsweise mit einer sich verändernden Helligkeit oder einem anderen Darstellungsparameter eingeblendet werden, es kann durch Vergrößern oder Verkleinern sowie durch andere Effekte zum Erscheinen innerhalb der Darstellung gebildet werden.

Bei dem Verfahren kann ferner vorgesehen sein, dass das Info-Objekt aus der Bedienoberfläche verschwindet oder ausgeblendet wird. Dies kann beispielsweise erfolgen, wenn ein anderes Info-Objekt für eine Info-Anwendung mit einer höheren Relevanz angezeigt werden soll oder wenn der Relevanzwert der ersten Info-Anwendung einen bestimmten Schwellenwert nicht mehr übersteigt. Dabei kann ein Verschwinden beispielsweise so dargestellt werden, dass das Info-Objekt aus dem Info-Bereich hinaus verschoben wird. Insbesondere weist die Darstellung der Bewegung in die gleiche Richtung wie beim Auftauchen des Info-Objekts. Beispielsweise "fällt" das Info-Objekt mit einem höheren Relevanzwert zunächst von oben in den Info-Bereich und es "fällt" später, wenn der Relevanzwert geringer ist oder ein anderes Info-Objekt angezeigt werden soll, nach unten heraus, um den Info-Bereich wieder freizugeben. Analog dazu kann das Info-Objekt, wenn es zunächst von einer Seite in den Info-Bereich "geschoben" wurde, später zur gegenüberliegenden Seite "herausgeschoben" werden.

Bei dem Verfahren ist insbesondere vorgesehen, dass stets lediglich höchstens ein Info-Objekt vollständig in den Info-Bereich dargestellt wird. Insbesondere werden bei einem Wechsel zwischen verschiedenen Info-Objekten, wenn also beispielsweise das grafische Info-Objekt durch ein zweites Info-Objekt abgelöst wird, die beiden Info-Objekte teilweise dargestellt. Bei weiteren Ausbildungen können mehrere Info-Objekte zugleich im Info-Bereich angezeigt werden, wobei insbesondere anhand der jeweiligen aktuellen Relevanzwerte die Anordnung und/oder Ausbildung der Info-Objekte relativ zueinander bestimmt werden.

Bei einer Weiterbildung wird ferner ein zweiter Relevanzwert einer zweiten Info-Anwendung bestimmt und ein zweites grafisches Info-Objekt wird anhand der zweiten Info-Anwendung erzeugt. Das zweite grafische Info-Objekt wird in dem Info-Bereich ausgegeben, wobei in Abhängigkeit von einem Vergleich des ersten und zweiten Relevanzwert eine Reihenfolge und/oder eine Anzeigedauer für das erste und das zweite Info-Objekt bestimmt wird. Dadurch können vorteilhafterweise mehrere Info-Objekte ausgegeben werden, insbesondere in einer bestimmten Reihenfolge nacheinander und/oder für jeweils eine bestimmte Zeitdauer.

Insbesondere wird das Info-Objekt, welches der Info-Anwendung mit dem höheren Relevanzwert zugeordnet ist, gemäß der Reihenfolge zuerst beziehungsweise gemäß der Anzeigedauer für eine längere Zeit angezeigt. Die Relevanzwerte werden anhand der Kontextdaten bestimmt, wobei insbesondere jeweils aktuelle Kontextdaten berücksichtigt werden. Das heißt, die Relevanzwerte können sich, wenn die Kontextdaten aktualisiert werden, verändern und es kann sich eine geänderte Reihenfolge beziehungsweise eine veränderte Anzeigedauer für die Info-Objekte ergeben.

Ferner kann ein dynamisches Umsortieren der angezeigten Info-Objekte ausgegeben werden, insbesondere durch eine Animation, bei welcher eine Bewegung eines Info-Objekts zu einer anderen Position innerhalb angezeigten Reihe von Info-Objekten ausgegeben wird.

Bei einer Ausbildung werden das erste und zweite grafische Info-Objekt nacheinander angezeigt, wobei zunächst das erste grafische Info-Objekt angezeigt wird und anschließend das zweite Info-Objekt anstelle des ersten Info-Objekts angezeigt wird, wobei durch eine Bedienhandlung das erste oder zweite Info-Objekt anzeigbar ist. Dadurch kann vorteilhafterweise eine Historie der dargestellten Info-Objekte aufgerufen werden.

Beispielsweise werden die Info-Objekte angezeigt, indem sie von einem Rand des Info-Bereichs in den Info-Bereich hinein verschoben werden. Wird ein weiteres Info-Objekt angezeigt, so kann das bereits angezeigte durch das neue Info-Objekt verdrängt werden. Zum Beispiel werden Info-Objekte von oben in den Info-Bereich geschoben beziehungsweise die "fallen" in den Info-Bereich. Weitere Info-Objekte, die im Info-Bereich angezeigt werden sollen, kommen ebenfalls von oben, während bereits zuvor angezeigte Info-Objekte nach unten verschoben werden beziehungsweise "aus dem Info-Bereich heraus fallen". Analog dazu kann eine seitliche Verschiebung dargestellt werden oder ein neues Info-Objekt kann von einem unteren Rand nach oben an die Position verschoben werden, bei welcher es schließlich angezeigt werden soll.

Ferner können mehrere Info-Objekte gleichzeitig angezeigt werden, wobei eine darstellbaren Menge von Info-Objekten definiert ist, von denen eine Teilmenge der Menge von Info-Objekten gleichzeitig angezeigt wird; diese Teilmenge kann auch genau ein Info-Objekt umfassen.

Die Bedienhandlung zum Anzeigen des ersten oder zweiten Info-Objekts umfasst insbesondere eine Wischgeste, durch die ein Verschieben einer Reihe dargestellter Info-Objekte ausgeführt wird, sodass die aktuell ausgegebene Teilmenge der Info-Objekte verändert wird.

Beispielsweise wird ein Fallen der Info-Objekte in den Info-Bereich dargestellt, wobei ein neues Info-Objekt ein zuvor dargestelltes nach unten hin verdrängt. Die Darstellung erfolgt so, dass die aktuell und früher dargestellten Info-Objekte entlang eines virtuellen Bandes angeordnet sind, welches durch eine Wischgeste in senkrechter Richtung verschoben werden kann.

Dabei können zuvor dargestellte Info-Objekte, wenn sie durch die Bedienhandlung erneut dargestellt werden, auf veränderte Weise ausgebildet sein. Insbesondere kann sich der zugeordnete Relevanzwert verändern und ein Info-Objekt kann, wenn ein Relevanz-Schwellenwert unterschritten wird, als obsolet markiert werden. Dies kann auf an sich bekannte Weise unterschiedlich erfolgen, etwa durch eine ausgegraute Darstellung mit geringerer Farbsättigung, Helligkeit oder verringertem Kontrast. Ferner kann vorgesehen sein, dass bei obsoleten Info-Objekten eine zuvor gegebene Bedienbarkeit nicht mehr oder nur noch in beschränktem Umfang möglich ist.

Bei einer weiteren Ausbildung umfasst das erste grafische Info-Objekt ein Bedienelement, eine Betätigung des Bedienelements wird erfasst und ein Zusatz-Info-Bereich wird gebildet, in dem ein grafisches Zusatz-Info-Objekt ausgegeben wird. Hierdurch können vorteilhafterweise zusätzliche Bereiche genutzt werden, um zu dem aktuell angezeigten Info-Objekt beziehungsweise zu der ihm zugeordneten Info-Anwendung weitere Informationen auszugeben und/oder eine weitere Bedienbarkeit zu erlauben.

Dabei wird das Zusatz-Info-Objekt insbesondere außerhalb des Info-Bereichs ausgegeben. Es kann andere Bereiche beispielsweise überdecken, etwa in der Art eines Popup, eines zusätzlichen Fensters beziehungsweise Widgets oder als Erweiterung eines im Info-Bereich dargestellten Fensters beziehungsweise Widgets.

Bei dem Verfahren kann das Zusatz-Info-Objekt ferner so dargestellt werden, dass es einen weiteren Anzeigebereich der grafischen Bedienoberfläche, insbesondere den oben beschriebenen ersten oder zweiten Anzeigebereich, einnimmt und gegebenenfalls zuvor dargestellte Inhalte ersetzt. Zum Beispiel wird das Info-Objekt im Info-Bereich dargestellt und - gegebenenfalls nach einer Bedienhandlung wie einem Antippen oder anderweitigen betätigen im Bereich des Info-Objekts - ein insbesondere dann benachbart dazu angeordneter Anzeigebereich wird durch eine zu der Info-Anwendung gehörige Anzeige des Zusatz-Info-Objekts ersetzt.

Wenn eine solche Ersetzung der Inhalte eines weiteren Anzeigebereichs vorgesehen ist, kann ferner vorgesehen sein, dass den Anzeigebereichen der grafischen Bedienoberfläche jeweils ein Prioritätswert zugeordnet ist. In Abhängigkeit von diesem Prioritätswert und insbesondere dem Relevanzwert für das jeweilige Info-Objekt kann bestimmt werden, ob ein Inhalt eines Anzeigebereichs durch das Zusatz-Info-Objekt ersetzt werden darf beziehungsweise in welchem Anzeigebereich der grafischen Bedienoberfläche eine solche Ersetzung durchgeführt wird. Das heißt, wenn beispielsweise nach einer Betätigung im Bereich des Info-Objekts zusätzlich ein Zusatz-Info-Objekt dargestellt werden soll, kann anhand des Prioritätswertes eines benachbarten Anzeigebereichs bestimmt werden, ob der Inhalt dieses Anzeigebereichs durch das Zusatz-Info-Objekt ersetzt werden darf; dabei wird insbesondere auch der Relevanzwert für die Info-Anwendung zu dem Zusatz-Info-Objekt berücksichtigt.

Das Zusatz-Info-Objekt kann gemeinsam mit dem Info-Objekt in dem Info-Bereich dargestellt werden und zusammen mit diesem nach einer bestimmten Zeitdauer oder nach dem Erfassen einer Bedienhandlung aus der Anzeige entfernt werden. Es kann ferner, ähnlich wie oben für die Info-Objekte beschrieben, in einer Historie gespeichert und durch eine Bedienhandlung wieder aufgerufen werden.

Bei dem Verfahren kann ferner anschließend an die Ausgabe des Info-Objekts der Info-Bereich wieder aus der grafischen Bedienoberfläche entfernt werden, wobei sich der erste Anzeigebereich wieder vergrößert. Insbesondere wird dadurch eine Lücke, die zuvor durch eine Verkleinerung des ersten Anzeigebereichs geschaffen wurde, wieder geschlossen. Zum Beispiel verschwindet das Info-Objekt nach einer bestimmten Anzeigedauer oder nach einer bestimmten Bedienhandlung des Nutzers, oder der Relevanzwert der zugeordneten Info-Anwendung wird geringer, sodass er beispielsweise einen Relevanz-Schwellenwert unterschreitet und das zugehörige Info-Objekt nicht mehr dargestellt werden soll.

Das erfindungsgemäße Bediensystem für ein Fahrzeug umfasst eine Steuereinheit, die dazu eingerichtet ist, Anzeigedaten einer grafischen Bedienoberfläche mit zumindest einem ersten Anzeigebereich zu erzeugen, eine Ausgabeeinheit, die dazu eingerichtet ist, die Anzeigedaten auszugeben, wobei die grafische Bedienoberfläche einen Grundzustand und einen Info-Zustand aufweist, und eine Kontexterfassungseinheit, die dazu eingerichtet ist, Kontextdaten über einen aktuellen Kontext des Fahrzeugs zu erfassen. Dabei ist die Steuereinheit ferner dazu eingerichtet, anhand der erfassten Kontextdaten zumindest einen ersten Relevanzwert für eine erste Info-Anwendung zu bestimmen, in Abhängigkeit von dem bestimmten ersten Relevanzwert der ersten Info-Anwendung einen Info-Zustand zu aktivieren, wobei beim Aktivieren des Info-Zustands der erste Anzeigebereich so verkleinert wird, dass ein Info-Bereich gebildet wird, und ein grafisches Info-Objekt anhand der ersten Info-Anwendung zu erzeugen und in dem Info-Bereich auszugeben, wobei die Steuereinheit dazu eingerichtet ist, den ersten Relevanzwert mit einem vorgegebenen Relevanz-Schwellenwert zu vergleichen und das grafische Info-Objekt zu erzeugen, wenn der erste Relevanzwert den Relevanz-Schwellenwert überschreitet.

Das erfindungsgemäße Bediensystem ist insbesondere ausgebildet, mittels des vorstehend beschriebenen erfindungsgemäßen Verfahrens betrieben zu werden. Das Bediensystem weist somit dieselben Vorteile auf wie das erfindungsgemäße Verfahren.

Die Erfindung wird nun anhand von Ausführungsbeispielen mit Bezug zu den Zeichnungen erläutert.
Figur 1 zeigt ein Fahrzeug mit einem Ausführungsbeispiel des erfindungsgemäßen Bediensystems,
Figuren 2A bis 2C zeigen Ausführungsbeispiele von Anzeigen, die durch das Bediensystem erzeugt werden können,
Figuren 3A bis 3F zeigen weitere Ausführungsbeispiele von Anzeigen, die durch das Bediensystem erzeugt werden können, und
Figuren 4A bis 4G zeigen weitere Ausführungsbeispiele von Anzeigen, die durch das Bediensystem erzeugt werden können.

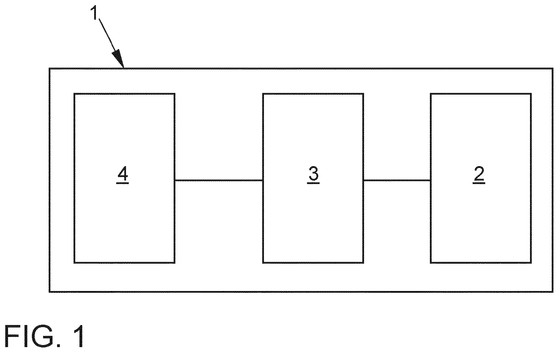

Mit Bezug zu Figur 1 wird ein Fahrzeug mit einem Ausführungsbeispiel des erfindungsgemäßen Bediensystems erläutert.

Das Fahrzeug 1 umfasst eine Ausgabeeinheit 2, die bei dem Ausführungsbeispiel als Display 2 ausgebildet ist. Das Display 2 ist mit einer Steuereinheit 3 des Fahrzeugs 1 gekoppelt. Das Fahrzeug 1 umfasst ferner eine Kontexterfassungseinheit 4, die bei dem Ausführungsbeispiel verschiedene Sensoren und Erfassungseinrichtungen umfasst.

Die Kontexterfassungseinheit 4 ist bei dem Ausführungsbeispiel dazu ausgebildet, Umgebungsdaten in einer Umgebung des Fahrzeugs zu erfassen, wobei eine Kamera sowie Radarsensoren verwendet werden. Anhand der Daten dieser Sensoren können Objekte, Fahrzeuge und weitere Verkehrsteilnehmer im Umfeld des Fahrzeugs 1 erfasst werden. Ferner ist ein GPS Sensor vorgesehen, durch den die Position des Fahrzeugs 1 bestimmt werden kann. Ferner weist die Kontexterfassungseinheit 4 eine Schnittstelle zu einem CAN-Bus des Fahrzeugs 1 auf, über den beispielsweise eine Geschwindigkeit und Beschleunigung des Fahrzeugs 1 sowie weitere Fahrzeugdaten erfasst werden können. Mittels einer weiteren Schnittstelle zu einem neuen mobilen Nutzergerät (nicht dargestellt) kann die Kontexterfassungseinheit 4 auf Nutzerdaten eines Nutzers zugreifen, die bei dem Ausführungsbeispiel eine Kontaktdatenbank, ein Telekommunikationssystem für Text- und Sprachkommunikation sowie Termindaten umfassen. Bei weiteren Ausführungsbeispielen können alternativ oder zusätzlich andere Sensoren verwendet werden, etwa Lidar, Ultraschall oder Einrichtungen zur Beobachtung des Fahrzeuginnenraums, oder es können Schnittstellen zu weiteren Einrichtungen vorgesehen sein, beispielsweise soziale Netze, Cloud-Services oder andere externe Dienste.

Das Display 2 ist auf an sich bekannte Weise ausgebildet und bei dem Ausführungsbeispiel als Mitteldisplay in das Armaturenbrett des Fahrzeugs 1 integriert. Dabei kann das Display in einem Touchscreen integriert sein, bei dem eine berührungsempfindliche Oberfläche über einer Anzeigefläche des Displays 2 angeordnet ist und Eingaben eines Nutzers erfasst werden können.

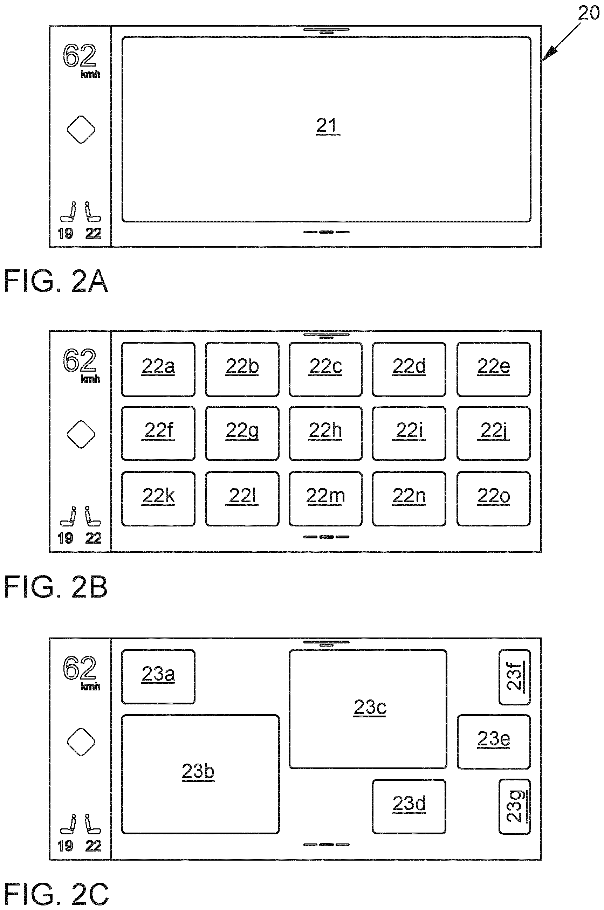

Mit Bezug zu den Figuren 2A bis 2C werden Ausführungsbeispiele von Anzeigen erläutert, die durch das Bediensystem erzeugt werden können. Dabei wird von dem oben erläuterten Ausführungsbeispiel des erfindungsgemäßen Bediensystems ausgegangen.

Bei dem in Figur 2A gezeigten Fall weist eine grafische Bedienoberfläche 20 einen Anzeigebereich 21 auf. Dieser ist ein innerhalb der Bedienoberfläche 20 gebildeter, zur Ausgabe von thematisch zusammenhängenden Informationen reservierter Flächenbereich. Der Anzeigebereich 21 ist bei dem Ausführungsbeispiel als Widget 21 ausgebildet, das heißt, er umfasst die Ausgabe von Daten sowie die Bereitstellung von Bedienmöglichkeiten für ein Anwendungsprogramm, welches in die grafische Bedienoberfläche 20 integriert ist. Das Widget 21 kann beispielsweise eine Navigation, eine Medienwiedergabe, eine Telekommunikation und/oder ein Anwendungsprogramm für eine andere Aufgabe betreffen.

Ferner sind innerhalb der grafischen Bedienoberfläche 20 weitere Anzeigeelemente vorgesehen, insbesondere eine Ausgabe der aktuellen Geschwindigkeit des Fahrzeugs 1 sowie eine Ausgabe betreffend die Einstellungen einer Sitzheizung, worauf nachfolgend jedoch nicht weiter eingegangen wird. Trotz dieser weiteren Elemente innerhalb der Bedienoberfläche 20 wird die in Figur 2A Darstellung eines großen Anzeigebereichs als "Vollbilddarstellung" für den Anzeigebereich 21 bezeichnet.

Bei dem in Figur 2B gezeigten Fall weist die grafische Bedienoberfläche 20 mehrere Anzeigebereiche 22a bis 22o auf, die in einer Matrix angeordnet sind. Auch hier sind die Anzeigebereiche 22a bis 22o als Widgets 22a bis 22o ausgebildet. Sie können ferner als Programmsymbole ausgebildet sein, durch deren Betätigung zu einer Vollbilddarstellung wie in Figur 2A gewechselt wird, wobei ein jeweils zugeordneten Anwendungsprogramm aufgerufen wird.

Bei dem in Figur 2C gezeigten Fall sind Anzeigebereiche 23a bis 23g weniger regelmäßig innerhalb der Fläche verteilt, die bei dem in Figur 2A gezeigten Fall von der Vollbilddarstellung des Anzeigebereichs 21 eingenommen wird. Auch hier sind bei dem Ausführungsbeispiel die Anzeigebereiche 23a bis 23g als Widgets 23a bis 23g ausgebildet. Er kann vorgesehen sein, dass durch Betätigen eines Widget 23a bis 23g eine Vollbilddarstellung wie in Figur 2A für ein jeweils zugeordnetes Anwendungsprogramm hergestellt wird.

Bei dem Ausführungsbeispiel ist vorgesehen, dass zwischen den in den Figuren 2A bis 2C gezeigten Darstellungen umgeschaltet werden kann, insbesondere mittels einer Bedienhandlung, die etwa eine Wischgeste, eine Rotation oder ein Verschieben eines Bedienelements oder eine andere Betätigung umfasst. Ferner kann innerhalb der Bedienoberfläche 20 einen Bedienelement vorgesehen sein, durch dessen Betätigung zwischen den verschiedenen Fällen der Figuren 2A bis 2C umgeschaltet werden kann.

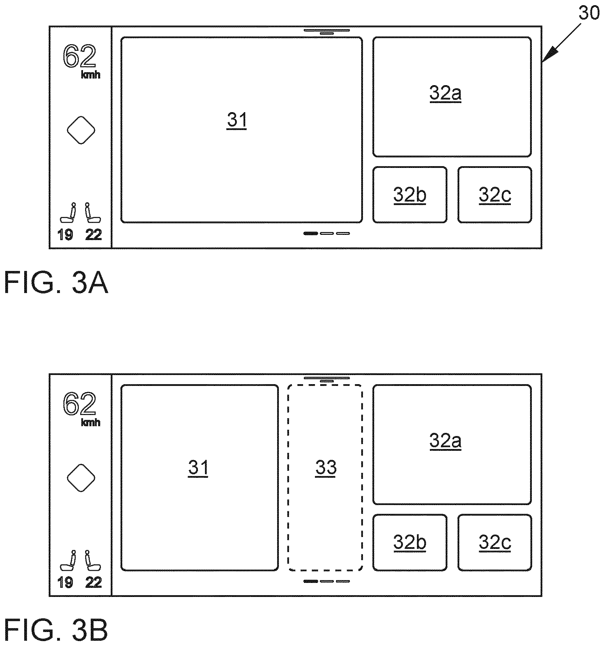

Anhand der in den Figuren 3A bis 3F gezeigten Ausführungsbeispiele von Anzeigen, die durch das Bediensystem erzeugt werden können, wird ein Ausführungsbeispiel des erfindungsgemäßen Verfahrens erläutert. Dabei wird von dem oben erläuterten Ausführungsbeispiel des erfindungsgemäßen Bediensystems ausgegangen.

Bei dem in Figur 3A gezeigten Fall weist eine grafische Bedienoberfläche 30 einen ersten Anzeigebereich 31 sowie drei weitere Anzeigebereiche 32a bis 32c auf. Die weiteren Anzeigebereiche 32a bis 32c sind dabei im rechten Bereich der Bedienoberfläche 30 angeordnet und in ihrer Ausdehnung kleiner als der erste Anzeigebereich 31 im linken Teil der Bedienoberfläche 30 ausgebildet.

Bei dem Ausführungsbeispiel kann ein Nutzer die in dem ersten Anzeigebereich 31 sowie in den weiteren Anzeigebereiche 32a bis 32c ausgegebenen Inhalte und/oder Bedienmöglichkeiten auf an sich bekannte Weise selbst konfigurieren. Beispielsweise wird im ersten Anzeigebereich 31 eine Ausgabe eines Navigationssystems ausgegeben.

Bei dem Ausführungsbeispiel des erfindungsgemäßen Verfahrens ist dieser Zustand als Grundzustand der grafischen Bedienoberfläche 30 definiert. Es werden laufend Kontextdaten für das Fahrzeug 1 mittels der Kontexterfassungseinheit 4 erfasst und durch die Steuereinheit 3 ausgewertet. Zugleich wird eine Vielzahl von Info-Anwendungen ausgeführt, durch die verschiedene Daten ausgegeben sowie Bedienmöglichkeiten bereitgestellt werden können. Die Info-Anwendungen werden insbesondere im Fahrzeug 1 ausgeführt, etwa mittels einer mit der Steuereinheit 3 gekoppelten Recheneinheit oder eine anderen Einrichtung. Insbesondere werden Info-Anwendungen durch ein mobiles Nutzergerät ausgeführt, das mit dem Fahrzeug 1 gekoppelt ist. Ferner können Info-Anwendungen von fahrzeugexternen Einrichtungen bereitgestellt werden, etwa von einem externen Server, insbesondere bei Online-Diensten beziehungsweise Cloud-Services. Die zur Verfügung stehenden Info-Anwendungen können beispielsweise in Abhängigkeit von der Identität eines Nutzers oder in Abhängigkeit von dem Fahrzeug 1 gebildet sein, etwa wenn die Info-Anwendungen an einen bestimmten Benutzer des Systems, welches die Info-Anwendungen ausführt, gekoppelt sind. Für die verschiedenen Info-Anwendungen werden anhand der erfassten Kontextdaten Relevanzwerte bestimmt, die angeben, wie relevant eine Instanz einer Info-Anwendung im aktuellen Kontext des Fahrzeugs 1 ist. Hierfür wird bei dem Ausführungsbeispiel eine Reihe von vorgegebenen Gewichtungen für verschiedene Info-Anwendungen genutzt, wobei die Gewichtungen aber auch vom aktuellen Kontext abhängig gebildet werden können.

Zum Beispiel wird ein hoher Relevanzwert für eine Info-Anwendung bestimmt, durch die ein eingehender Anruf über ein Telekommunikationssystem ausgegeben wird und der Nutzer den Anruf beantworten kann. Eine Info-Anwendung zum Ausgeben von Informationen über Sonderziele in einer räumlichen Umgebung einer aktuell befahrenen Route kann dann mit einem hohen Relevanzwert bewertet werden, wenn sich das Fahrzeug 1 aktuell an einer Position in der Nähe eines solchen Sonderziels befindet. Ferner können Info-Anwendungen zum Ausgeben von Informationen über die Tätigkeit eines Fahrerassistenzsystems beziehungsweise zum Erfassen von Eingaben des Nutzers für einen Fahrerassistenzsystem dann eine hohe Relevanz aufweisen, wenn eine Tätigkeit des Fahrerassistenzsystems für das Führen des Fahrzeugs 1 im aktuellen Kontext als notwendig oder sinnvoll bewertet wird.

Niedrige Relevanzwerte können dagegen beispielsweise bestimmt werden, wenn eine Info-Anwendung Informationen über Sonderziele betrifft, die weit von der aktuellen Position des Fahrzeugs 1 entfernt sind.

Bei dem Ausführungsbeispiel ist ein Relevanz-Schwellenwert vorgegeben, mit dem die Relevanzwerte für einzelne Info-Anwendungen verglichen werden. Wird der Relevanz-Schwellenwert überschritten, so wird davon ausgegangen, dass ein Info-Objekt für die Info-Anwendung erzeugt werden soll, um dem Nutzer beispielsweise eine relevante Information anzuzeigen und/oder ihm eine relevante Bedienung zu ermöglichen. Wird der Relevanz-Schwellenwert dagegen nicht erreicht, wird davon ausgegangen, dass die Info-Anwendung im derzeitigen Kontext nicht ausreichend relevant ist.

Bei weiteren Ausführungsbeispielen kann der Relevanz-Schwellenwert in Abhängigkeit von dem Kontext dynamisch gebildet werden. Beispielsweise wird ein höherer Relevanz-Schwellenwert bestimmt, wenn der Nutzer, insbesondere der Fahrer des Fahrzeugs 1, in einem aktuellen Kontext beispielsweise durch eine unübersichtliche Verkehrssituation stark gefordert ist und keine Anzeigen mit geringerer Relevanz verarbeitet werden können. Das heißt, wenn anhand der aktuellen Kontextdaten eine anstrengende oder schwierige Verkehrssituation erkannt wird, in welcher der Fahrer nicht gestört werden soll, wird der Relevanz-Schwellenwert entsprechend hoch bestimmt. Umgekehrt kann ein niedrigerer Relevanz-Schwellenwert bestimmt werden, wenn das Fahrzeug gerade steht, wenn der relevante Nutzer nicht der Fahrer des Fahrzeugs ist oder wenn die Führung des Fahrzeugs mithilfe zumindest teilweise automatischer Fahrerassistenzsysteme erfolgt.

Bei dem in Figur 3B gezeigten Fall wurde erkannt, dass der Relevanzwert für eine bestimmte Info-Anwendung den Relevanz-Schwellenwert im aktuellen Kontext überschreitet. Es soll daher ein der Info-Anwendung zugeordnetes grafisches Info-Objekt 34 ausgegeben werden, welches als Widget 34 für diese Info-Anwendung ausgebildet ist. Hierzu wird eine Verkleinerung der ersten Anzeigefläche 31 dargestellt, indem deren rechter Rand nach links verschoben wird. Hierdurch entsteht eine freie Fläche, in der ein Info-Bereich 33 ausgebildet wird. Bei dem Ausführungsbeispiel verändert sich dabei lediglich die Größe des ersten Anzeigebereichs 31, bei weiteren Ausführungsbeispielen können allerdings alternativ oder zusätzlich auch die weiteren Anzeigebereiche 32a bis 32c in ihrer Größe so verändert werden, dass der Info-Bereich 33 entsteht. Ferner kann, insbesondere zusätzlich zu einer Verkleinerung, eine Verschiebung des ersten 31 oder der weiteren Anzeigebereiche 32a bis 32c dargestellt werden, um den Info-Bereich 33 herzustellen.

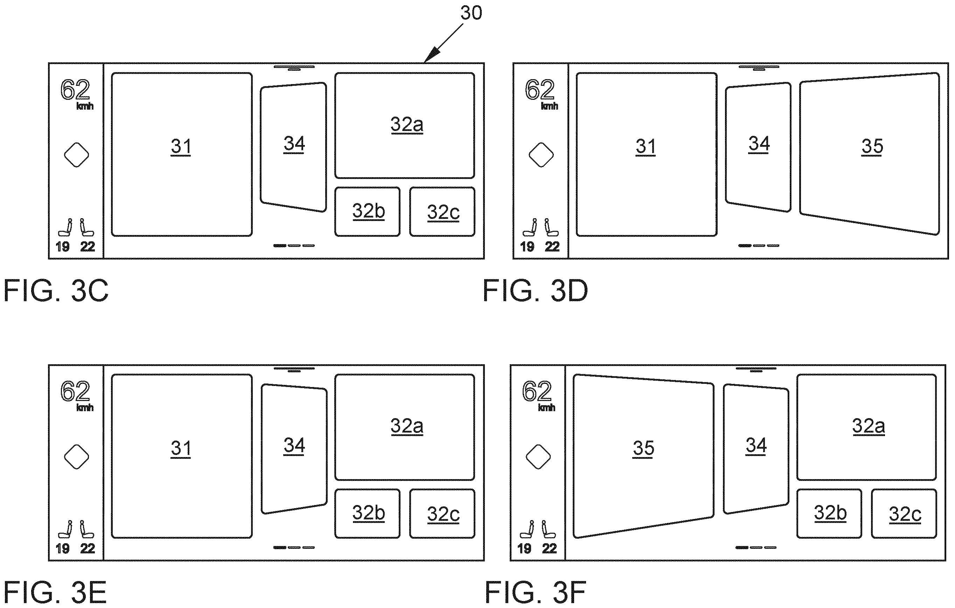

Bei dem in Figur 3C gezeigten Fall wird im Info-Bereich 33, wie er in Figur 3B gezeigt ist, das Info-Objekt 34 dargestellt. Insbesondere erfolgt die Anzeige des Info-Objekts 34 als sogenannte Feed-Card. Das Info-Objekt 34 ist als Widget 34 ausgebildet.

Bei dem Ausführungsbeispiel ist vorgesehen, dass beim Übergang von der in Figur 3B gezeigten Situationen zum Erscheinen des Info-Objekt 34 in Figur 3C eine animierte Darstellung so erzeugt wird, dass ein "Fallen" des ersten Info-Objekt 34 in den Info-Bereich 33 dargestellt wird. Das heißt, das Info-Objekt 34 bewegt sich vom oberen Rand des Info-Bereich 33 kommend in einer Bewegung nach unten innerhalb der grafischen Bedienoberfläche 33, ehe es etwa mittig im Info-Bereich 33 zum Halt kommt. Bei weiteren Ausführungsbeispielen kann das Info-Objekt 34 auf andere Weise erscheinen, beispielsweise indem es aus einer seitlichen Richtung in den Info-Bereich 33 "geschoben" wird, durch Einblenden oder auf andere an sich bekannte Weise.

Bei dem Ausführungsbeispiel ist ferner vorgesehen, dass das Info-Objekt 34 so dargestellt wird, dass ein Eindruck einer perspektivischen Darstellung so entsteht, dass das Info-Objekt 34 gegenüber der Ebene einer Anzeigefläche, in welcher die grafische Bedienoberfläche 30 angezeigt wird, nach hinten gekippt erscheint, was in einer Projektion auf die Ebene der Anzeigefläche zu einem trapezförmigen Umriss des Info-Objekt 34 führt. Die weiteren Anzeigebereiche 31, 32a bis 32c weisen dagegen im Wesentlichen rechteckige Umrisse auf. Bei weiteren Ausführungsbeispielen kann vorgesehen sein, dass auch das Info-Objekt 34 mit einem rechteckigen oder anderen Umriss ausgebildet ist, ferner können auf an sich bekannte Weise gebildeter Hervorhebungen vorgesehen sein, durch die das Info-Objekt 34 gegenüber den weiteren Anzeigebereichen 31, 32a bis 32c hervorgehoben ist.

Bei dem in Figur 3D gezeigten Fall umfasst die grafische Bedienoberfläche 30 ferner ein Zusatz-Info-Objekt 35, in diesem Fall wiederum ein Widget 35, welches die weiteren Anzeigebereiche 32a bis 32c im rechten Bereich der grafischen Bedienoberfläche 30 ersetzt. Bei dem dargestellten Ausführungsbeispiel wurde dieser Zustand durch eine Betätigung des Info-Objekt 34 erreicht, wobei durch diese Betätigung eine umfangreichere Darstellung der zugeordneten Info-Anwendung aufgerufen wurde. Bei dem Ausführungsbeispiel sind das Info-Objekt 34 und das Zusatz-Info-Objekt 35 auf perspektivische Weise so dargestellt, dass sie zwei gegenüber der Ebene der grafischen Bedienoberfläche 30 geschwenkte Feed-Cards darstellen, wobei das Zusatz-Info-Objekt 35 eine optische Fortsetzung des Info-Objekts 34 darstellt, wodurch auch ein inhaltlicher Zusammenhang zum Ausdruck gebracht wird.

Die in den Figuren 3E und 3F gezeigten Fälle entsprechen im Wesentlichen den oben mit Bezug zu den Figuren 3C und 3D erläuterten Fällen. Das Zusatz-Info-Objekt 35 wird jedoch in einem Bereich links von dem Info-Objekt 34 gebildet und ersetzt den ersten Anzeigebereich 31.

Die perspektivisch dargestellte Schwenkung des Info-Objekts 34 relativ zur Ebene der grafischen Bedienoberfläche 30 ist entsprechend umgekehrt.

Bei dem Ausführungsbeispiel wird entschieden, ob die Darstellungen analog zu den Figuren 3C und 3D, das heißt mit einem Zusatz-Info-Objekt 35 im rechten Bereich, oder analog zu den Figuren 3E und 3F, das heißt mit einem Zusatz-Info-Objekt 35 im Bereich links von dem Info-Objekt 34, ausgegeben werden, indem insbesondere in Abhängigkeit von aktuellen Kontextdaten Prioritäten der im ersten Anzeigebereich 31 und in den weiteren Anzeigebereichen 32a bis 32c ausgegebenen Inhalte bestimmt werden. Das heißt, es wird ermittelt, welche Inhalte aktuell von höherer Wichtigkeit sind und welche Inhalte durch das Zusatz-Info-Objekt 35 zumindest zeitweise überlagert oder verdrängt werden dürfen. Dabei kann bei weiteren Ausführungsbeispielen zudem ein Schwellenwert festgelegt sein, bei dessen Überschreitung ein Inhalt nicht durch einen Zusatz-Info-Objekt 31 verdeckt oder ersetzt werden darf, sodass dieses insbesondere nicht dargestellt werden kann, wenn sämtliche Anzeigebereich 31, 32a bis 32c den Schwellenwert überschreiten.

Bei weiteren Ausführungsbeispielen kann ferner der Nutzer durch eine Bedienhandlung bestimmen, auf welcher Seite des Info-Objekts 34 das Zusatz-Info-Objekt 35 ausgegeben werden soll, etwa durch eine Wischgeste in die entsprechende Richtung.

Bei einem weiteren Ausführungsbeispiel kann das Info-Objekt 35 als Popup ausgegeben werden, wobei insbesondere die in Figur 3A gezeigte Darstellung der grafischen Bedienoberfläche 30 zumindest teilweise überdeckt wird. Bei weiteren Ausführungsbeispielen kann das Zusatz-Info-Objekt 35 als Popup ausgegeben werden, wobei insbesondere die in Figur 3C oder 3E gezeigte Darstellung der grafischen Bedienoberfläche 30 zumindest teilweise überdeckt wird.

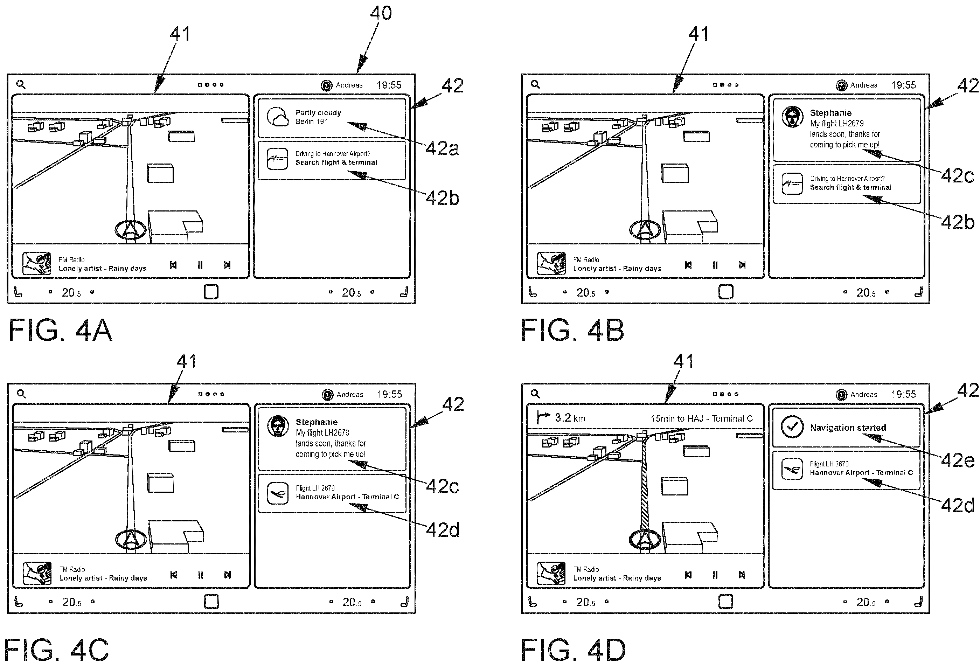

Anhand der in den Figuren 4A bis 4G gezeigten Ausführungsbeispiele von Anzeigen, die durch das Bediensystem erzeugt werden können, wird ein weiteres Ausführungsbeispiel des erfindungsgemäßen Verfahrens erläutert. Dabei wird von dem oben erläuterten Ausführungsbeispiel des erfindungsgemäßen Bediensystems ausgegangen. Ferner werden Elemente, die analog zu den oben mit Bezug zu den Figuren 3A bis 3F erläuterten Anzeigen ausgebildet sind, nicht erneut im Detail beschrieben.

Bei dem in Figur 4A gezeigten Fall umfasst die grafische Bedienoberfläche 40 einen ersten Anzeigebereich 41, in dem Daten eines Navigationssystems sowie Daten einer Medienwiedergabe ausgegeben werden, und einen Info-Bereich 42, der hier als Widget 42 ausgebildet ist.

Es kann bei weiteren Ausführungsbeispielen vorgesehen sein, dass, ähnlich wie bei den oben mit Bezug zu den Figuren 3A bis 3F erläuterten Anzeigen, der Info-Bereich 42 lediglich dann erzeugt wird, wenn für eine Info-Anwendung einen Relevanzwert bestimmt wurde, der einen bestimmten Relevanz-Schwellenwert überschreitet; dabei kann sich der erste Anzeigebereich 41 zunächst im Wesentlichen über die gesamte Breite der grafischen Bedienoberfläche 40 erstrecken und anschließend zum Ausbilden des Info-Bereichs 42 verkleinert werden.

In dem Info-Bereich 42 werden Info-Objekte 42a bis 42j ausgegeben, die als Sub-Widgets 42a bis 42j ausgebildet sind. Das heißt, sie sind dem Widget 42, welches den Info-Bereich 42 darstellt, untergeordnet und werden innerhalb der von diesem eingenommenen Fläche ausgegeben. Bei dem Ausführungsbeispiel umfassen die Info-Objekte 42a bis 42j jeweils eine grafische Darstellung, die insbesondere in Abhängigkeit von der jeweils zugeordneten Info-Anwendung gebildet wird, sodass der Nutzer sofort erkennen kann, welche Art von Informationen oder Bedienmöglichkeit es sich handelt. Sie umfassen ferner Textelemente. Sie können ferner mit einer Umrandung sowie gegebenenfalls einer Schattierung dargestellt werden. Ferner kann durch an sich bekannte grafische Darstellungsweisen erreicht werden, dass ein Info-Objekt 42a bis 42j gegenüber anderen Info-Objekten 42a bis 42j hervorgehoben oder in den Vordergrund gerückt dargestellt wird.

Bei dem Ausführungsbeispiel werden, ähnlich wie oben bereits beschrieben, Relevanzwerte für eine Vielzahl von Info-Anwendungen bestimmt und mit einem Relevanz-Schwellenwert verglichen. Beim Überschreiten des Relevanz-Schwellenwerts wird ein entsprechendes Info-Objekt 42a bis 42j im Info-Bereich 42 ausgegeben. Die Info-Objekte 42a bis 42j werden untereinander dargestellt, wobei sich ihre Anordnung in einer Reihenfolge und ihre Größe nach ihrem Relevanzwert errichtet. Je höher der Relevanzwert, desto weiter oben wird ein Info-Objekt 42a bis 42j ausgegeben. Ferner werden als besonders relevant erkannte Info-Objekte 42a bis 42j vergrößert und nach vorne gerückt dargestellt.

Die in den Figuren 4A bis 4G gezeigten Anzeigen stellen einen beispielhaften Ablauf einer Anzeige dar, während sich der Kontext des Fahrzeuges 1 mit der Zeit ändert, unter anderem weil sich das Fahrzeug 1 bewegt, weil eine Kommunikation durchgeführt wird, weil der Nutzer Bedienhandlungen vornimmt und weil äußere Daten und Benachrichtigungen empfangen werden.

Bei dem in Figur 4A gezeigten Fall umfassen die erfassten Kontextdaten beispielsweise eine aktuelle Position des Fahrzeugs 1 einer bestimmten Position, eine befahrene Route in Richtung eines Flughafens sowie von einer externen Einheit bereitgestellte Wetterinformationen. Der Info-Bereich 42 umfasst hier ein erstes Info-Objekt 42a, mit dem Informationen über das aktuelle Wetter in der aktuellen Umgebung des Fahrzeugs 1 ausgegeben werden, und ein zweites Info-Objekt 42b, welches einer Info-Anwendung zugeordnet ist, mittels welcher ein Flughafen als wahrscheinliches Reiseziel erkannt wurde und dem Nutzer eine Bedienmöglichkeit angeboten wird, um Informationen über an dem Flughafen ankommende Flüge abzurufen.

Bei dem in Figur 4B gezeigten Fall umfasst der Info-Bereich 42 ein weiteres Info-Objekt 42c, welches die Ausgabe der Wetterdaten ersetzt, da eine höhere Relevanz dafür bestimmt wurde. Das weitere Info-Objekt 42c gibt den Inhalt einer Textnachricht aus, wobei die Absenderin mit Namen und Profilbild dargestellt wird. Eine weitere Info-Anwendung wertet den Inhalt der Textnachricht aus, welche die Angabe einer Flugnummer, einen Hinweis auf eine baldige Landung und einen Hinweis auf eine geplante Abholung am Flughafen umfasst.

Bei dem in Figur 4C gezeigten Fall umfasst der Info-Bereich 42 ein Info-Objekt 42d mit Informationen über den in der Textnachricht genannten Flug, nämlich den Zielflughafen und das Terminal, bei dem der Flug ankommt und eine Abholung erfolgen kann. Dabei wird gegenüber dem in Figur 4B gezeigten Fall das Info-Objekt 42b, durch welches das Abrufen von Flugdaten angeboten wurde, ersetzt.

Bei dem in Figur 4D gezeigten Fall wird davon ausgegangen, dass der Nutzer, etwa durch Betätigen des Info-Objekts 42d mit Angaben zum Flughafen-Terminal, eine Navigation zum Flughafen gestartet hat. Die Routenführung wird im ersten Anzeigebereich 41 ausgegeben. Der Info-Bereich 42 umfasst hier ein weiteres Info-Objekt 42e, welches das Info-Objekt 42c mit der Ausgabe der Textnachricht ersetzt, wobei dem Nutzer bestätigt wird, dass eine Navigation gestartet wurde.

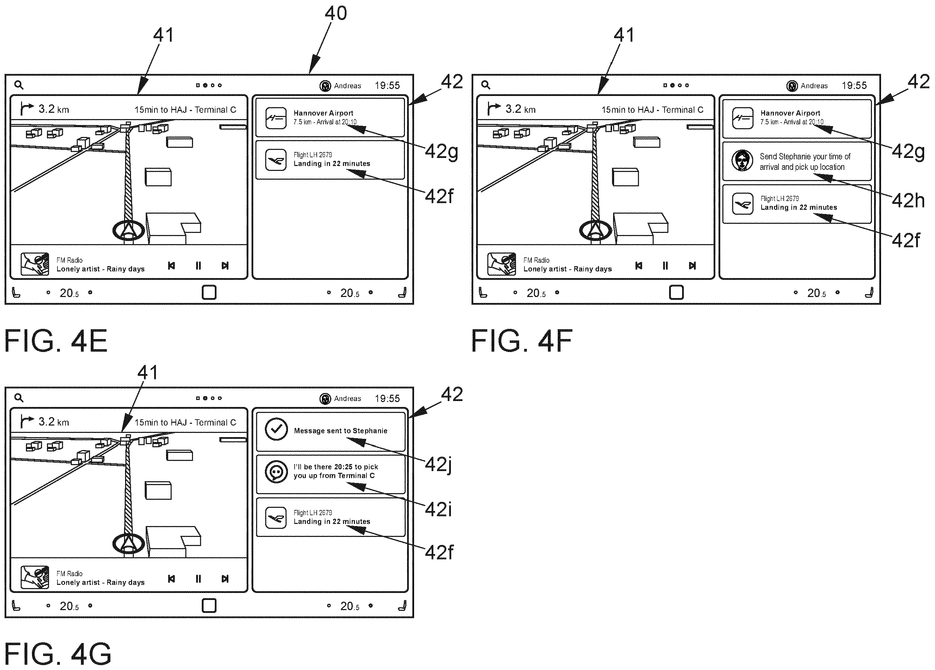

Bei dem in Figur 4E gezeigten Fall wird die Navigation fortgesetzt und im Info-Bereich 42 werden Info-Objekte 42f, 42g ausgegeben, die den Nutzer über den Fortgang der Navigation beziehungsweise über die erwartete Ankunftszeit des Fluges informieren.

Bei dem in Figur 4F gezeigten Fall wird eine automatische Antwortoption angeboten, mit welcher der Nutzer auf die zuvor ausgegebene Textnachricht reagieren kann. Hierzu wird ein Info-Objekt 42h ausgegeben, welches den Hinweis umfasst, dass dem Kommunikationspartner eine Ankunftszeit am Flughafen und ein Ort zur Abholung mitgeteilt werden kann. Bei dem Ausführungsbeispiel ist dieses Info-Objekt 42h zwischen dem Info-Objekt 42g, welches die Navigation betrifft, und dem Info-Objekt 42f, welches die voraussichtliche Ankunftszeit des Fliegers betrifft, angeordnet.

Bei dem in Figur 4G gezeigten Fall wird davon ausgegangen, dass der Nutzer, etwa durch Betätigen des Info-Objekts 42h für die automatische Antwortoption, dem Senden einer entsprechenden Nachricht zugestimmt hat. Es wird ein Info-Objekt 42j ausgegeben, welches das Senden der automatisch generierten Antwort bestätigt, sowie ein Info-Objekt 42i, welches den Text der automatischen Antwort wiedergibt.

Bei Übergängen zwischen verschiedenen Anordnungen und Konfigurationen der grafischen Info-Objekte 42a bis 42j können unterschiedliche Darstellungen ausgegeben werden, insbesondere mit einer animierten Darstellung, bei welcher die Ausgabe durch eine Bildfolge erscheint. Einzelne Info-Objekte 42a bis 42j können erscheinen oder verschwinden, wobei insbesondere ein Ein- und Ausblenden dargestellt wird. Ferner kann ein Info-Objekt 42a bis 42j hervorgehoben werden, etwa durch an sich bekannte grafische Darstellungsmöglichkeiten oder durch eine räumlich erscheinende Veränderung, bei der er beispielsweise ein Info-Objekt 42a bis 42j in den Vordergrund gerückt wird, was etwa durch eine Änderung der Größe und/oder eine Schattierung dargestellt werden kann. Info-Objekte 42a bis 42j können zudem neue angeordnet werden, wobei ihre Verschiebung relativ zueinander und relativ zum Info-Bereich 42 dargestellt werden kann. Ferner kann der Inhalt eines Info-Objekts 42a bis 42j aktualisiert werden, wobei der Inhalt innerhalb des Info-Objekts 42a bis 42j verändert und insbesondere durch einen neuen Inhalt ersetzt wird.

Ferner können Interaktionen eines Nutzers mit einzelnen Info-Objekten 42a bis 42j oder mit davon umfassten Elementen durchgeführt werden. Hierfür ist eine Erfassungseinheit vorgesehen, etwa eine berührungsempfindliche Oberfläche eines Touchscreens, durch den auch die Ausgabe der grafischen Bedienoberfläche 40 erfolgt, oder andere Arten der Erfassung. Die Interaktionen können beispielsweise ein Antippen oder Anklicken eines grafischen Info-Objekts 42a bis 42j umfassen, wobei unter einem einfachen oder mehrfachen Tippen, sowie dem Antippen auf verschiedene Arten, etwa Links- und Rechtsklick, ein Finger oder mehrere Finger, unterschieden werden kann. Ferner kann eine länger andauernde Berührung, ein so genannter Longpress, erfasst werden und es werden weitere Bedienmöglichkeiten bereitgestellt, etwa im Sinne eines Kontextmenüs oder zusätzlicher Optionen. Ferner kann eine Wischgeste oder eine andere Bedienung vorgesehen sein, um ein grafisches Info-Objekt 42a bis 42j zu verwerfen, etwa durch Schieben aus dem Info-Bereich 42 heraus, beispielsweise wenn der Nutzer ein bestimmtes Info-Objekt 42a bis 42j als nicht relevant bewertet.

Bei weiteren Ausführungsbeispielen ist ferner vorgesehen, dass Info-Objekte 42a bis 42j, die nicht mehr relevant sind oder die weniger relevant sind als andere Info-Objekte 42a bis 42j, weiter unten als höher relevante Info-Objekte 42a bis 42j innerhalb des Info-Bereich 42 dargestellt werden. Dies führt mit der Zeit dazu, dass Info-Objekte 42a bis 42j so weit nach unten unten rutschen, dass sie über den unteren Rand des Info-Bereich 42 hinaus geschoben werden und nicht mehr sichtbar sind. Das heißt, eine Vielzahl von Info-Objekten 42a bis 42j ist darstellbar, wobei allerdings nur eine echte Teilmenge tatsächlich dargestellt wird. Die Anordnung der Vielzahl von Info-Objekten 42a bis 42j entspricht einer Historie der Info-Objekte 42a bis 42j, da hierdurch früher dargestellte Info-Objekte 42a bis 42j weiterhin umfasst sind. Insbesondere wird dabei die Darstellung von solchen Info-Objekten 42a bis 42j, die nicht mehr relevant sind, verändert, etwa durch eine ausgegraute Darstellung. Weniger relevante beziehungsweise ältere Info-Objekte 42a bis 42j können dabei durch eine Bedienhandlung noch aufgerufen werden, etwa eine Wischgeste im Bereich des Info-Bereich 42, wodurch die Reihe der untereinander dargestellten Info-Objekte 42a bis 42j verschoben und eine neue Teilmenge dargestellt wird. Solche Bedienhandlungen können zudem dazu benutzt werden, Präferenzen eines Nutzers zu lernen, etwa mittels eines Verfahrens zum Maschinenlernen. Die gelernten Daten können wiederum als Kontextdaten erfasst und berücksichtigt werden.

Die bei den Ausführungsbeispielen dargestellte grafische Bedienoberfläche 30, 40 ermöglicht eine Ausgabe von Informationen und/oder Bedienmöglichkeiten auf Basis von Kontextdaten. Diese können beispielsweise Informationen über ein gelerntes Verhalten eines Nutzers betreffen, etwa Verhaltensweisen in bestimmten klassifizierten Situationen, beim Einkaufen, auf dem Weg zur Arbeit oder zum Tanken, die Abholung von Kindern oder ähnliches. Ferner kann eine Vielzahl von Informationen berücksichtigt werden, etwa über eine Fahrweise, einen Kommunikationsstil, etwa mittels Telefonie oder durch Video- oder Textmitteilungen, einen Medienkonsum, eine Freizeitgestaltung, eine vernetzte Umgebung der Wohnung (sogenanntes *smart home*) sowie über eine aktuelle Position und den Aufenthalt in einer definierten Umgebung, die Art der aktuellen Fahrt, Wetterbedingungen, Kontaktlisten, gegebenenfalls Mitfahrer, eine aktuelle Verkehrssituation und ein Stresslevel des Fahrers, die Fahrzeit und Fahrtstrecke, eine Ladung oder ähnliches. Anhand dieser Vielzahl von Informationen über den aktuellen Kontext kann bestimmt werden, wann dem Nutzer bestimmte Informationen mitgeteilt und Bedienmöglichkeiten angeboten werden sollen. Dies erfolgt vorrangig dann, wenn der Nutzer diese auch kognitiv aufnehmen und verarbeiten kann, das heißt, wenn die Fahrsituation und der Kontext es zulassen, dass etwa standortbezogene Dienstleistungen angezeigt werden.

Ferner kann eine Priorisierung der darstellbaren Informationen anhand der Relevanzwert erfolgen, um Relevantes besonders deutlich darzustellen, während andere Inhalte demgegenüber reduziert sind, bis hin zum vollständigen Ausblenden nicht relevanter Informationseinheiten und Anzeigen.

Hierdurch kann bestimmt werden, wann dem Nutzer bestimmte Informationen und Bedienmöglichkeiten, etwa betreffend Dienstleistungen und Angebote, angeboten werden sollen. Hierdurch können beispielsweise werbliche Inhalte so ausgegeben werden, dass sie dem tatsächlichen Interesse des Nutzers in einem bestimmten Kontext entsprechen und von diesem gut erfasst werden können.

Anders als bei bekannten Verfahren steht bei der Erfindung die Verwaltung der Info-Objekte in Abhängigkeit von ihrer Relevanz im Vordergrund. Inhalte und zusätzliche Objekte können innerhalb der grafischen Bedienoberfläche dargestellt werden, um Nachrichten, Informationen und Dienste anzuzeigen. Insbesondere dient dabei eine besondere Anzeigekachel innerhalb der grafischen Bedienoberfläche, die insbesondere als Info-Bereich ausgebildet ist, als Anzeige-Container zum Darstellen der Inhalte.

Die Info-Objekte weisen dabei eine besonders flexible Bedientiefe auf, die durch Anpassen der Größe, Anordnung und des Inhalts beliebig gestaltet werden kann, von einfachem Auslösen einer Aktion, etwa durch Betätigen oder Antippen, bis hin zum Bedienen eines Services und komplexen Funktionsumfangs.

Der Info-Bereich kann ferner in einem zentralen Bereich der grafischen Bedienoberfläche gebildet werden, um hierdurch eine besonders geeignete Anzeigefläche für Info-Objekte anbieten zu können.

Der Info-Bereich kann dabei als Plattform dienen, die etwa von einem Systemanbieter verwaltet wird. Hierdurch können relevante Ausgaben von weiteren Anbietern, etwa Werbepartnern oder Dienstleistern, besonders einfach in das Bediensystem eingebunden werden. Die Zahl der je nach ihrer Relevanz anbietbaren Dienste kann dadurch erheblich erweitert werden.

Ferner kann ein festgelegtes Format für Inhalte innerhalb der Info-Objekte vorgesehen sein, wodurch insbesondere ein eigenes Farb- und Gestaltungsschema, ein sogenanntes Corporate Design, für das Bediensystem erreicht werden kann. Drittanbieter können ihre Angebote, Anwendungen oder Apps in eigenem Corporate Design (Look&Feel) im Info-Bereich anzeigen lassen.

Der Info-Bereich kann ferner als zentraler Anzeigebereich der grafischen Bedienoberfläche ausgebildet sein, in dem relevante Funktions-, Bedien- und Informationsmöglichkeiten bereitgestellt werden. Daneben kann beispielsweise eine Ausgabe einer Navigationskarte erfolgen, sofern diese relevant ist. Der Info-Bereich kann dadurch als Sammel-Container für Inhalte dienen, die von einem aktuellen Kontext und eine Situation abhängig sind. Der Leistungsumfang kann dynamisch erweitert werden, ohne dass eine Vielzahl einzelner Info-Anwendungen integriert und bedient werden muss. Es wird ein intelligentes, kontextsensitives Bediensystem ermöglicht, was zu einer erheblichen Vereinfachung der Bedienung führt.

Bei weiteren Ausführungsbeispielen kann eine Sprachbedienung erfolgen, wobei hierdurch vorteilhafterweise der visuelle Gesamtumfang der grafischen Bedienoberfläche verkleinert werden kann.

Innerhalb der grafischen Bedienoberfläche können ferner Informationen und Bedienmöglichkeiten von Mobilgeräten integriert werden, sodass eine zentrale Bedieneinheit bereitgestellt wird. Über Schnittstellen werden die relevanten Informationen empfangen und Steuersignale, etwa bei Bedienhandlungen des Nutzers, übertragen.

Das Bediensystem weist eine große Offenheit gegenüber neuen Anwendungen sowie eine große Skalierbarkeit auf. Neue Funktionen und Info-Anwendungen können leicht integriert werden, um die Fahrt mit dem Fahrzeug szenarisch und kontextabhängig zu begleiten.

### Bezugszeichenliste

1 Fahrzeug
2 Ausgabeeinheit; Display
3 Steuerungseinheit
4 Kontexterfassungseinheit
20 Grafische Bedienoberfläche
21 Anzeigebereich, Widget
22a bis 22o Anzeigebereich, Widget
23a bis 23g Anzeigebereich, Widget
30 Grafische Bedienoberfläche
31 Erster Anzeigebereich
32a bis 32c Zweiter Anzeigebereich
33 Info-Bereich
34 Grafisches Info-Objekt, Widget
35 Zusatz-Info-Objekt, Widget
40 Grafische Bedienoberfläche
41 Erster Anzeigebereich
42 Info-Bereich; Widget
42a bis 42j Info-Objekt; Sub-Widget

## Patentansprüche

1. Verfahren zum Betreiben eines Bediensystems in einem Fahrzeug (1), bei dem
Anzeigedaten einer grafischen Bedienoberfläche (20; 30; 40) mit zumindest einem ersten Anzeigebereich (31; 41) erzeugt und ausgegeben werden; wobei
die grafische Bedienoberfläche (20; 30; 40) einen Grundzustand und einen Info-Zustand aufweist;
Kontextdaten über einen aktuellen Kontext des Fahrzeugs (1) erfasst werden; anhand der erfassten Kontextdaten ein erster Relevanzwert für eine erste Info-Anwendung bestimmt wird;
in Abhängigkeit von dem bestimmten ersten Relevanzwert der ersten Info-Anwendung der Info-Zustand aktiviert wird; wobei
beim Aktivieren des Info-Zustands der erste Anzeigebereich (31; 41) so verkleinert wird, dass ein Info-Bereich (33; 42) gebildet wird; und
ein grafisches Info-Objekt (34; 42a bis 42j) anhand der ersten Info-Anwendung erzeugt und in dem Info-Bereich (33; 42) ausgegeben wird,
**dadurch gekennzeichnet, dass**
der erste Relevanzwert mit einem vorgegebenen Relevanz-Schwellenwert verglichen wird; und
das grafische Info-Objekt (34; 42a bis 42j) erzeugt wird, wenn der erste Relevanzwert den Relevanz-Schwellenwert überschreitet.

2. Verfahren gemäß Anspruch 1,
**dadurch gekennzeichnet, dass**
die erfassten Kontextdaten Merkmale des Fahrzeugs (1), einen Betriebszustand des Fahrzeugs (1), Merkmale einer Fahrt eines Nutzers mit dem Fahrzeug (1) und/oder Nutzerdaten des Nutzers umfassen.

3. Verfahren gemäß einem der vorhergehenden Ansprüche,
**dadurch gekennzeichnet, dass**
beim Verkleinern des ersten Anzeigebereichs (31; 41) eine Bildfolge so erzeugt wird, dass ein Verschieben zumindest eines Randes des ersten Anzeigebereichs (31; 41) dargestellt wird.

4. Verfahren gemäß einem der vorhergehenden Ansprüche,
**dadurch gekennzeichnet, dass**
die grafische Bedienoberfläche (20; 30; 40) ferner einen zweiten Anzeigebereich (32a bis 32c) umfasst, der im Grundzustand der grafischen Bedienoberfläche (20; 30; 40) an den ersten Anzeigebereich (31; 41) angrenzend angeordnet ist; wobei
der Info-Bereich (33; 42) beim Aktivierend des Info-Zustands zwischen dem ersten (31; 41) und dem zweiten Anzeigebereich (32a bis 32c) gebildet wird.

5. Verfahren gemäß einem der vorhergehenden Ansprüche,
**dadurch gekennzeichnet, dass**
beim Aktivieren des Info-Zustands das grafische Info-Objekt (34; 42a bis 42j) mit einer Bewegung von einem Rand des Info-Bereichs (33; 42) in den Info-Bereich (33; 42) verschoben wird.

6. Verfahren gemäß einem der vorhergehenden Ansprüche,
**dadurch gekennzeichnet, dass**
ferner ein zweiter Relevanzwert einer zweiten Info-Anwendung bestimmt wird; und ein zweites grafisches Info-Objekt (42a bis 42j) anhand der zweiten Info-Anwendung erzeugt wird; und
das zweite grafische Info-Objekt (42a bis 42j) in dem Info-Bereich (33; 42) ausgegeben wird; wobei
in Abhängigkeit von einem Vergleich des ersten und zweiten Relevanzwerts eine Reihenfolge und/oder eine Anzeigedauer für das erste (34; 42a bis 42j) und das zweite grafische Info-Objekt (42a bis 42j) bestimmt wird.

7. Verfahren gemäß Anspruch 6,
**dadurch gekennzeichnet, dass**
das erste (34; 42a bis 42j) und zweite grafische Info-Objekt (42a bis 42j) nacheinander angezeigt werden; wobei
zunächst das erste grafische Info-Objekt (34; 42a bis 42j) angezeigt wird; und
anschließend das zweite Info-Objekt (42a bis 42j) anstelle des ersten Info-Objekts (34; 42a bis 42j) angezeigt wird; wobei
durch eine Bedienhandlung das erste (34; 42a bis 42j) oder zweite Info-Objekt (42a bis 42j) anzeigbar ist.

8. Verfahren gemäß einem der vorhergehenden Ansprüche,
**dadurch gekennzeichnet, dass**
das erste grafische Info-Objekt (34; 42a bis 42j) ein Bedienelement umfasst; eine Betätigung des Bedienelements erfasst wird; und
ein Zusatz-Info-Bereich gebildet wird, in dem ein grafisches Zusatz-Info-Objekt (35) ausgegeben wird.

9. Bediensystem für ein Fahrzeug (1), umfassend
eine Steuereinheit (3), die dazu eingerichtet ist, Anzeigedaten einer grafischen Bedienoberfläche (20; 30; 40) mit zumindest einem ersten Anzeigebereich (31; 41) zu erzeugen;
eine Ausgabeeinheit (2), die dazu eingerichtet ist, die Anzeigedaten auszugeben; wobei
die grafische Bedienoberfläche (20; 30; 40) einen Grundzustand und einen Info-Zustand aufweist;
und eine Kontexterfassungseinheit (4), die dazu eingerichtet ist, Kontextdaten über einen aktuellen Kontext des Fahrzeugs (1) zu erfassen; wobei
die Steuereinheit (3) ferner dazu eingerichtet ist, anhand der erfassten Kontextdaten zumindest einen ersten Relevanzwert für eine erste Info-Anwendung zu bestimmen;
in Abhängigkeit von dem bestimmten ersten Relevanzwert der ersten Info-Anwendung den Info-Zustand zu aktivieren; wobei
beim Aktivieren des Info-Zustands der erste Anzeigebereich (31; 41) so verkleinert wird, dass ein Info-Bereich (33; 42) gebildet wird; und
ein grafisches Info-Objekt (34; 42a bis 42j) anhand der ersten Info-Anwendung zu erzeugen und in dem Info-Bereich (33; 42) auszugeben,
**dadurch gekennzeichnet, dass**
die Steuereinheit (3) dazu eingerichtet ist, den ersten Relevanzwert mit einem vorgegebenen Relevanz-Schwellenwert zu vergleichen und
das grafische Info-Objekt (34; 42a bis 42j) zu erzeugen, wenn der erste Relevanzwert den Relevanz-Schwellenwert überschreitet.

## Claims

1. Method for operating an operating system in a vehicle (1), in which display data of a graphical user interface (20; 30; 40) having at least a first display region (31; 41) are generated and output;
the graphical user interface (20; 30; 40) having a basic state and an information state;
context data about a current context of the vehicle (1) being collected;
based on the collected context data, a first relevance value for a first information application being determined;
the information state being activated on the basis of the determined first relevance value of the first information application;
when the information state is activated, the first display region (31; 41) being reduced in size so that an information region (33; 42) is formed; and
a graphical information object (34; 42a to 42j) being generated based on the first information application and output in the information region (33; 42),
**characterized in that**
the first relevance value is compared with a predetermined relevance threshold value; and
the graphical information object (34; 42a to 42j) is generated if the first relevance value exceeds the relevance threshold value.

2. Method according to claim 1,
**characterized in that**
the collected context data include features of the vehicle (1), an operating state of the vehicle (1), features of a user's journey with the vehicle (1) and/or user data of the user.

3. Method according to either of the preceding claims,
**characterized in that**
when the first display region (31; 41) is reduced in size, an image sequence is generated such that a displacement of at least one edge of the first display region (31; 41) is shown.

4. Method according to any one of the preceding claims,
**characterized in that**
the graphical user interface (20; 30; 40) further comprises a second display region (32a to 32c) which, in the basic state of the graphical user interface (20; 30; 40), is arranged adjacent to the first display region (31; 41);
the information region (33; 42) being formed between the first display region (31; 41) and the second display region (32a to 32c) when the information state is activated.

5. Method according to any one of the preceding claims,
**characterized in that**
when the information state is activated, the graphical information object (34; 42a to 42j) is displaced with a movement from one edge of the information region (33; 42) into the information region (33; 42).

6. Method according to any one of the preceding claims,
**characterized in that**
furthermore, a second relevance value of a second information application is determined; and
a second graphical information object (42a to 42j) is generated based on the second information application; and
the second graphical information object (42a to 42j) is output in the information region (33; 42);
an order and/or a display duration for the first graphical information object (34; 42a to 42j) and the second graphical information object (42a to 42j) is determined on the basis of a comparison of the first and second relevance values.

7. Method according to claim 6,
**characterized in that**
the first graphical information object (34; 42a to 42j) and the second graphical information object (42a to 42j) are displayed one after the other;
first the first graphical information object (34; 42a to 42j) being displayed; and subsequently the second information object (42a to 42j) being displayed instead of the first information object (34; 42a to 42j);
it being possible for the first information object (34; 42a to 42j) or the second information object (42a to 42j) to be displayed by an operator action.

8. Method according to any one of the preceding claims,
**characterized in that**
the first graphical information object (34; 42a to 42j) comprises an operating element;
an actuation of the operating element is detected; and
an additional information region is formed in which a graphical additional information object (35) is output.

9. Operating system for a vehicle (1), comprising
a control unit (3) which is configured to generate display data of a graphical user interface (20; 30; 40) having at least a first display region (31; 41);
an output unit (2) which is configured to output the display data;
the graphical user interface (20; 30; 40) having a basic state and an information state;
and a context detection unit (4) which is configured to collect context data about a current context of the vehicle (1);
the control unit (3) being further configured to determine at least a first relevance value for a first information application based on the collected context data;
to activate the information state on the basis of the determined first relevance value of the first information application;
when the information state is activated, the first display region (31; 41) being reduced in size so that an information region (33; 42) is formed; and
to generate a graphical information object (34; 42a to 42j) based on the first information application and to output it in the information region (33; 42),
**characterized in that**
the control unit (3) is configured to compare the first relevance value with a predetermined relevance threshold value and
to generate the graphical information object (34; 42a to 42j) if the first relevance value exceeds the relevance threshold value.

## Revendications

1. Procédé destiné à faire fonctionner un système de commande dans un véhicule (1), dans lequel des données d'affichage d'une interface utilisateur graphique (20 ; 30 ; 40) comportant au moins une première zone d'affichage (31 ; 41) sont générées et sorties ; dans lequel
l'interface utilisateur graphique (20 ; 30 ; 40) présente un état de base et un état d'information ;
des données de contexte concernant un contexte actuel du véhicule (1) sont détectées ; une première valeur de pertinence pour une première application d'information est déterminée à l'aide des données de contexte détectées ;
l'état d'information est activé en fonction de la première valeur de pertinence déterminée de la première application d'information ; dans lequel
lors de l'activation de l'état d'information, la première zone d'affichage (31 ; 41) est réduite de manière à former une zone d'information (33 ; 42) ; et
un objet d'information graphique (34 ; 42a à 42j) est généré à l'aide de la première application d'information et est sorti dans la zone d'information (33 ; 42),
**caractérisé en ce que**
la première valeur de pertinence est comparée à une valeur seuil de pertinence prédéfinie ; et
l'objet d'information graphique (34 ; 42a à 42j) est généré lorsque la première valeur de pertinence dépasse la valeur seuil de pertinence.

2. Procédé selon la revendication 1,
**caractérisé en ce que**
les données de contexte détectées comprennent des caractéristiques du véhicule (1), un état de fonctionnement du véhicule (1), des caractéristiques d'un trajet d'un utilisateur avec le véhicule (1) et/ou des données d'utilisateur de l'utilisateur.

3. Procédé selon l'une des revendications précédentes,
**caractérisé en ce que**
lors de la réduction de la première zone d'affichage (31 ; 41), une séquence d'images est générée de telle sorte qu'un déplacement d'au moins un bord de la première zone d'affichage (31 ; 41) est représenté.

4. Procédé selon l'une des revendications précédentes,
**caractérisé en ce que**
l'interface utilisateur graphique (20 ; 30 ; 40) comprend en outre une seconde zone d'affichage (32a à 32c) qui, dans l'état de base de l'interface utilisateur graphique (20 ; 30 ; 40), est disposée de manière adjacente à la première zone d'affichage (31 ; 41) ; dans lequel
la zone d'information (33 ; 42) est formée entre la première (31 ; 41) et la seconde zone d'affichage (32a à 32c) lors de l'activation de l'état d'information.

5. Procédé selon l'une des revendications précédentes,
**caractérisé en ce que**
lors de l'activation de l'état d'information, l'objet d'information graphique (34 ; 42a à 42j) est décalé avec un déplacement d'un bord de la zone d'information (33 ; 42) dans la zone d'information (33 ; 42).

6. Procédé selon l'une des revendications précédentes,
**caractérisé en ce**
**qu'**en outre, une seconde valeur de pertinence d'une seconde application d'information est déterminée ; et
un second objet d'information graphique (42a à 42j) est généré à l'aide de la seconde application d'information ; et
le second objet d'information graphique (42a à 42j) est sorti dans la zone d'information (33 ; 42) ; dans lequel
en fonction d'une comparaison de la première et de la seconde valeur de pertinence, un ordre et/ou une durée d'affichage pour le premier (34 ; 42a à 42j) et le second objet d'information graphique (42a à 42j) sont déterminés.

7. Procédé selon la revendication 6,
**caractérisé en ce que**
le premier (34 ; 42a à 42j) et le second objet d'information graphique (42a à 42j) sont affichés successivement ; dans lequel
le premier objet d'information graphique (34 ; 42a à 42j) est d'abord affiché ; et
ensuite, le second objet d'information (42a à 42j) est affiché à la place du premier objet d'information (34 ; 42a à 42j) ; dans lequel
le premier (34 ; 42a à 42j) ou le second objet d'information (42a à 42j) peut être affiché par une action de commande.

8. Procédé selon l'une des revendications précédentes,
**caractérisé en ce que**
le premier objet d'information graphique (34 ; 42a à 42j) comprend un élément de commande ;
un actionnement de l'élément de commande est détecté ; et
une zone d'information supplémentaire est formée, dans laquelle un objet graphique d'information supplémentaire (35) est sorti.

9. Système de commande pour un véhicule (1), comprenant
une unité de contrôle (3) qui est conçue pour générer des données d'affichage d'une interface utilisateur graphique (20 ; 30 ; 40) comportant au moins une première zone d'affichage (31 ; 41) ;
une unité de sortie (2) qui est conçue pour sortir les données d'affichage ; dans lequel
l'interface utilisateur graphique (20 ; 30 ; 40) présente un état de base et un état d'information ;
et une unité de détection de contexte (4) qui est conçue pour détecter des données de contexte concernant un contexte actuel du véhicule (1) ; dans lequel
l'unité de contrôle (3) est en outre conçue pour déterminer au moins une première valeur de pertinence pour une première application d'information à l'aide des données de contexte détectées ;
activer l'état d'information en fonction de la première valeur de pertinence déterminée de la première application d'information ; dans lequel
lors de l'activation de l'état d'information, la première zone d'affichage (31 ; 41) est réduite de manière à former une zone d'information (33 ; 42) ; et
générer un objet d'information graphique (34 ; 42a à 42j) à l'aide de la première application d'information et le sortir dans la zone d'information (33 ; 42),
**caractérisé en ce que**
l'unité de contrôle (3) est conçue pour comparer la première valeur de pertinence à une valeur seuil de pertinence prédéfinie et
générer l'objet d'information graphique (34 ; 42a à 42j) lorsque la première valeur de pertinence dépasse la valeur seuil de pertinence.
